(19) **Europäisches Patentamt / European Patent Office / Office européen des brevets**

(11) **EP 4 694 015 A1**

(12) **EUROPEAN PATENT APPLICATION**
published in accordance with Art. 153(4) EPC

(43) Date of publication:
**11.02.2026 Bulletin 2026/07**

(21) Application number: **24807468.4**

(22) Date of filing: **10.05.2024**

(51) International Patent Classification (IPC):
**H04L 5/00** (2006.01)    **H04L 27/26** (2006.01)

(52) Cooperative Patent Classification (CPC):
**H04L 5/00; H04L 27/26**

(86) International application number:
**PCT/KR2024/006368**

(87) International publication number:
**WO 2024/237595 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.05.2023 KR 20230061963**

(71) Applicant: **Samsung Electronics Co., Ltd.**
**Suwon-si, Gyeonggi-do 16677 (KR)**

(72) Inventors:
• **CHOI, Kyungjun**
**Suwon-si, Gyeonggi-do 16677 (KR)**
• **JANG, Youngrok**
**Suwon-si, Gyeonggi-do 16677 (KR)**
• **JI, Hyoungju**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND DEVICE FOR CHANGING DYNAMIC WAVEFORM IN WIRELESS COMMUNICATION SYSTEM**

(57) The present disclosure relates to a 5G or 6G communication system for supporting higher data transmission rates. Provided is a method comprising the steps of: receiving, from a base station, information indicating through higher layer signalling that a waveform change indicator for a PUSCH is included in DCI; receiving the DCI for scheduling the PUSCH from the base station, the DCI including the waveform change indicator; and transmitting uplink data on the PUSCH to the base station on the basis of the DCI, wherein the PUSCH is transmitted on the basis of CP-OFDM when the DCI includes an FDRA field and the FDRA field corresponds to resource allocation type 0.

FIG. 11

**Description**

[Technical Field]

The disclosure relates to operations of a UE and a base station and, more particularly, to a method and a device for a UE to dynamically change a waveform to transmit and receive data.

[Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems as described above, various services can be provided, and accordingly there is a need for ways to smoothly provide these services.

[Disclosure]

[Technical Problem]

An embodiment disclosed herein is to provide a device and a method capable of effectively providing a service in a mobile communication system. Specifically, proposed are a method and a device for determining a waveform for a physical uplink shared channel (PUSCH) in an indicated bandwidth part and transmitting a PUSCH when bandwidth part switching is indicated and a dynamic waveform switching field is configured through downlink control information (DCI).

[Technical Solution]

According to the disclosure, at least the following methods may be considered.

In a first method, a default waveform used for each BWP may be configured for a UE. When the above case occurs, the UE may transmit an uplink signal using the default waveform.

In a second method, a UE may configure a waveform corresponding to "0" of a 1-bit dynamic waveform switching field as a default waveform and configure a waveform corresponding to "1" as a waveform other than the default waveform. Therefore, in the above case, the UE may determine the value of the 1-bit waveform switching field as "0" through zero-padding and transmit the default waveform.

According to at least one embodiment of the disclosure, a method performed by a terminal in a communication system includes: receiving information indicating that a waveform switching indicator for a physical uplink shared channel (PUSCH) is included in downlink control information (DCI) from a base station through higher-layer signaling; receiving the DCI scheduling the PUSCH from the base station, the DCI including the waveform switching indicator; and transmitting uplink data on the PUSCH to the base station, based on the DCI, wherein, when the DCI includes a frequency domain resource assignment (FDRA) field and the FDRA field corresponds to resource allocation type 0, the PUSCH is transmitted based on cyclic prefix-orthogonal frequency division multiplexing (CP-OFDM).

Further, a method performed by a base station in a communication system includes: transmitting information indicating that a waveform switching indicator for a physical uplink shared channel (PUSCH) is included in downlink control information (DCI) to a terminal through higher-layer signaling; transmitting the DCI scheduling the PUSCH to the terminal, the DCI including the waveform switching indicator; and receiving uplink data on the PUSCH scheduled by the DCI from the terminal, wherein, when the DCI includes a frequency domain resource assignment (FDRA) field and the FDRA field corresponds to resource allocation type 0, the PUSCH is received based on cyclic prefix-orthogonal frequency division multiplexing (CP-OFDM).

In addition, a terminal in a communication system includes: a transceiver; and a controller configured to: receive information indicating that a waveform switching indicator for a physical uplink shared channel (PUSCH) is included in downlink control information (DCI) from a base station through higher-layer signaling, receive the DCI scheduling the PUSCH from the base station, the DCI including the waveform switching indicator, and transmit uplink data on the PUSCH to the base station, based on the DCI, wherein, when the DCI includes a frequency domain resource assignment (FDRA) field and the FDRA field corresponds to resource allocation type 0, the PUSCH is transmitted based on cyclic prefix-orthogonal frequency division multiplexing (CP-OFDM).

Furthermore, a base station in a communication system includes: a transceiver; and a controller configured to transmit information indicating that a waveform switching indicator for a physical uplink shared channel (PUSCH) is included in downlink control information (DCI) to a terminal through higher-layer signaling, transmit the DCI scheduling the PUSCH to the terminal, the DCI including the waveform switching indicator, and receive uplink data on the PUSCH scheduled by the DCI from the terminal, wherein, when the DCI includes a frequency domain resource assignment (FDRA) field and the FDRA field corresponds to resource allocation type 0, the PUSCH is received based on cyclic prefix-orthogonal frequency division multiplexing (CP-OFDM).

[Advantageous Effects]

An embodiment disclosed herein provides a device and a method capable of effectively providing a service in a mobile communication system. Specifically, when bandwidth part switching is indicated and a dynamic waveform switching field is configured through DCI according to at least one embodiment disclosed herein, a UE and a base station may determine a waveform for a PUSCH in an indicated bandwidth part and transmit a PUSCH.

[Description of Drawings]

FIG. 1 illustrates a basic structure of a time-frequency domain, which is a radio resource domain used to transmit data or control channels, in a 5G system.
FIG. 2 illustrates an example of a structure of a frame, a subframe, and a slot in a 5G system.
FIG. 3 illustrates an example of a bandwidth part configuration in a 5G system.
FIG. 4 illustrates an example of a control resource set (CORESET) used to transmit a downlink control channel in a 5G communication system.
FIG. 5 illustrates an example of a basic unit of time and frequency resources constituting a downlink control channel available in a 5G system.
FIG. 6 illustrates an example of frequency domain resource allocation with regard to a PDSCH or PUSCH in a 5G system.
FIG. 7 illustrates an example of time domain resource allocation with regard to a PDSCH in a 5G system.
FIG. 8 illustrates an example of time domain resource allocation according to a subcarrier spacing with regard to a data channel and a control channel in a 5G system.
FIG. 9 illustrates an example of receiving a DCI format indicating BWP switching;
FIG. 10 illustrates an example of a configuration of an FDRA field and a dynamic waveform switching field;
FIG. 11 illustrates an example of an operation performed by a UE according to the disclosure;
FIG. 12 illustrates an example of an operation performed by a base station according to the disclosure;
FIG. 13 illustrates a structure of a UE in a wireless communication system according to an embodiment of the disclosure.
FIG. 14 illustrates a structure of a base station in a wireless communication system according to an embodiment of the disclosure.

[Mode for Invention]

Hereinafter, embodiments of the disclosure will be described in detail with reference to the accompanying drawings.
In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.
For the same reason, in the accompanying drawings, some elements may be exaggerated, omitted, or schematically illustrated. Also, the size of each element does not completely reflect the actual size. In the respective drawings, the same or corresponding elements are assigned the same reference numerals.
The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.
In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) (which may be used interchangeably with cyclic prefix-orthogonal frequency division multiplexing (CP-OFDM)) scheme in a downlink and employs a single carrier frequency division multiple access (SC-FDMA) (which may be used interchangeably with discrete Fourier transform-spread-orthogonal frequency division multiplexing (DFTS-OFDM)) scheme in an uplink. The above multiple access scheme may separate data or control information of respective users by allocating and operating time-frequency resources for carrying the data or control information for each user so as to avoid overlapping therebetween, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

In the following description, the term "a/b" may be understood as at least one of a and b.

Hereinafter, a frame structure of a 5G system will be described in more detail with reference to the accompanying drawings.

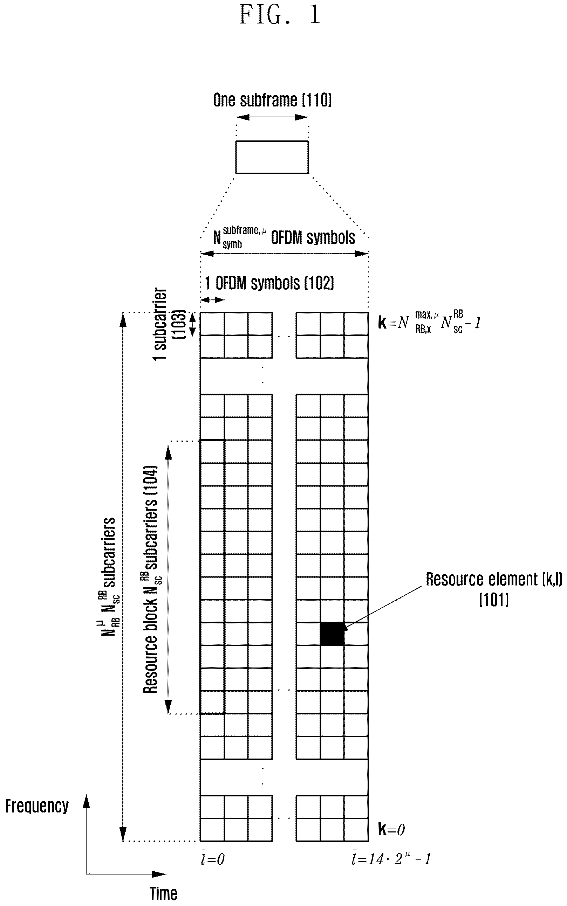

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (for example, 12) consecutive REs may constitute one resource block (RB) 104. In the time domain, one subframe 110 may include multiple OFDM symbols 102. For example, the length of one subframe may be 1 ms.

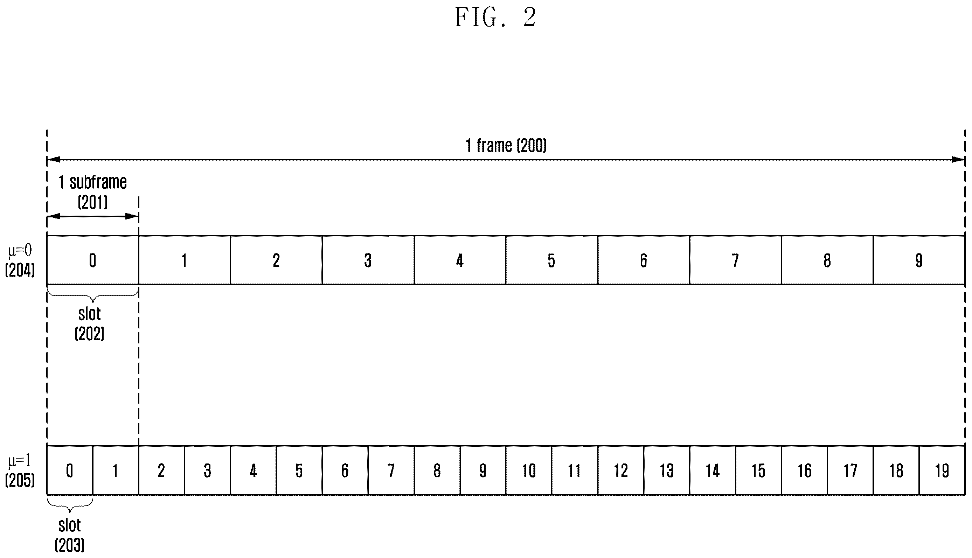

FIG. 2 illustrates an example of a structure of a frame, a subframe, and a slot in a 5G system.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example of FIG. 2 shows the case of $\mu$=0 (2-04) and the case of $\mu$=1 (2-05) as a configuration value for a subcarrier spacing. In the case of $\mu$=0 (204), one subframe 201 may include one slot 202, and in the case of $\mu$=1 (205), one subframe 201 may include two slots 203. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Next, a bandwidth part (BWP) configuration in a 5G communication system will be described in detail with reference to the accompanying drawings.

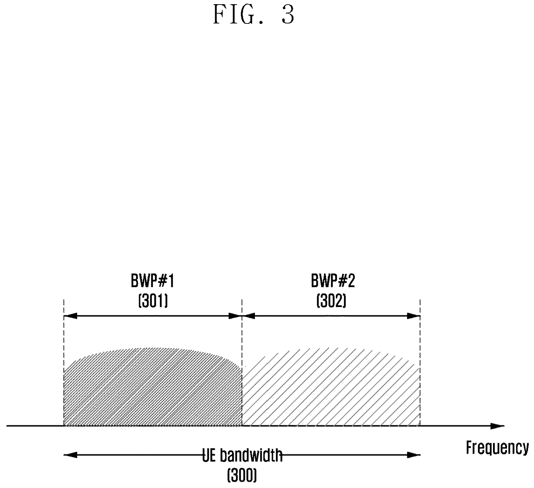

FIG. 3 illustrates an example of a bandwidth part configuration in a 5G system.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given below.

[Table 2]

```
BWP ::=                          SEQUENCE {

    bwp-Id                       BWP-Id,

     (bandwidth part identifier)

    locationAndBandwidth         INTEGER (1..65536),

    (bandwidth part location)

    subcarrierSpacing            ENUMERATED {n0, n1, n2, n3, n4, n5},

    (subcarrier spacing)

    cyclicPrefix                 ENUMERATED { extended }

    (cyclic prefix)

    }
```

Obviously, the above example is not limiting, and various parameters related to the bandwidth part may be configured for the UE, in addition to the above configuration information. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource set #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

The bandwidth part-related configuration supported by the 5G system may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined given in Table 3 below, for example.

[Table 3]

| $\mu$ | NR Slot length (ms) | BWP switch delay $T_{BWP}$ (slots) | |
| --- | --- | --- | --- |
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station. If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot $n+T_{BWP}$, and may transmit/receive a data channel scheduled by the corresponding DCI in the newly changed bandwidth part. According to an embodiment, if the base station wants to schedule a data channel by using the new bandwidth part, the base station may determine time domain resource allocation regarding the data channel, based on the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

Next, synchronization signal/physical broadcast channel (SS/PBCH) blocks in a 5G system will be described.

An SS/PBCH block may refer to a physical layer channel block including a primary synchronization signal (PSS), a secondary synchronization signal (SSS), and a PBCH. Details thereof are as follows.

- PSS: is a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: includes a combination of a PSS, an SSS, and a PBCH. One or multiple SS/PBCH blocks may be transmitted within a time period of 5 ms, and each transmitted SS/PBCH block may be distinguished by an index.

The UE may detect the PSS and the SSS in the initial access stage, and may decode the PBCH. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

Next, downlink control information (DCI) in a 5G system will be described in detail.

In a wireless communication system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH). A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 4 below, for example.

[Table 4]

| |
|---|
| - Identifier for DCI formats - [1] bit |
| - Frequency domain resource assignment- $\left[\left\lceil \log_2 (N_{RB}^{UL,BWP}(N_{RB}^{UL,BWP}+1)/2) \right\rceil\right]$ bits |
| - Time domain resource assignment - X bits |
| - Frequency hopping flag - 1 bit. |
| - Modulation and coding scheme - 5 bits |

(continued)

- New data indicator - 1 bit
- Redundancy version - 2 bits
- HARQ process number - 4 bits
- Transmit power control (TPC) command for scheduled PUSCH - [2] bits
- Uplink/ supplementary uplink (UL/SUL) indicator - 0 or 1 bit

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 5 below, for example.

[Table 5]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

∘ For resource allocation type 0, $\left\lceil N_{\mathrm{RB}}^{\mathrm{UL,BWP}} / P \right\rceil$ bits

∘ For resource allocation type 1, $\left\lceil \log_2 ( N_{\mathrm{RB}}^{\mathrm{UL,BWP}} ( N_{\mathrm{RB}}^{\mathrm{UL,BWP}} + 1 ) / 2 ) \right\rceil$ bits

- Time domain resource assignment -1, 2, 3, or 4 bits
- Virtual resource block (VRB)-to-physical resource block (PRB) mapping
- 0 or 1 bit, only for resource allocation type 1.
∘ 0 bit if only resource allocation type 0 is configured;
∘ 1 bit otherwise.
- Frequency hopping flag - 0 or 1 bit, only for resource allocation type 1.
∘ 0 bit if only resource allocation type 0 is configured;
∘ 1 bit otherwise.
- Modulation and coding scheme - 5 bits
- New data indicator - 1 bit
- Redundancy version - 2 bits
- HARQ process number - 4 bits
- 1st downlink assignment index- 1 or 2 bits
∘ 1 bit for semi-static HARQ-ACK codebook;
∘ 2 bits for dynamic HARQ-ACK codebook with single HARQ-ACK codebook.
- 2nd downlink assignment index - 0 or 2 bits
∘ 2 bits for dynamic HARQ-ACK codebook with two HARQ-ACK sub-codebooks;
∘ 0 bit otherwise.
- TPC command for scheduled PUSCH - 2 bits

- SRS resource indicator - $\left\lceil \log_2 \left( \sum_{k=1}^{L_{\max}} \binom{N_{\mathrm{SRS}}}{k} \right) \right\rceil$ or $\left\lceil \log_2 ( N_{\mathrm{SRS}} ) \right\rceil$ bits

∘ $\left\lceil \log_2 \left( \sum_{k=1}^{L_{\max}} \binom{N_{\mathrm{SRS}}}{k} \right) \right\rceil$ bits for non-codebook based PUSCH transmission;

∘ $\left\lceil \log_2 ( N_{\mathrm{SRS}} ) \right\rceil$ bits for codebook based PUSCH transmission.

- Precoding information and number of layers - up to 6 bits
- Antenna ports - up to 5 bits
- SRS request - 2 bits
- Channel state information (CSI) request - 0, 1, 2, 3, 4, 5, or 6 bits

(continued)

- Code block group (CBG) transmission information - 0, 2, 4, 6, or 8 bits
- Phase tracking reference signal (PTRS)-demodulation reference signal (DDMRS) association - 0 or 2 bits.
- beta_offset indicator - 0 or 2 bits
- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 6 below, for example.

[Table 6]

- Identifier for DCI formats - [1] bit

- Frequency domain resource assignment- $[ \lceil \log_2(N_{RB}^{DL,BWP}(N_{RB}^{DL,BWP}+1)/2) \rceil ]$ bits

- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 7 below, for example.

[Table 7]

- Carrier indicator - 0 or 3 bits
- Identifier for DCI formats - [1] bits
- Bandwidth part indicator - 0, 1 or 2 bits
- Frequency domain resource assignment

∘ For resource allocation type 0, $\lceil N_{RB}^{DL,BWP}/P \rceil$ bits

∘ For resource allocation type 1, $\lceil \log_2(N_{RB}^{DL,BWP}(N_{RB}^{DL,BWP}+1)/2) \rceil$ bits

- Time domain resource assignment -1, 2, 3, or 4 bits
- VRB-to-PRB mapping - 0 or 1 bit, only for resource allocation type 1.
∘ 0 bit if only resource allocation type 0 is configured;
∘ 1 bit otherwise.
- Physical resource block (PRB) bundling size indicator - 0 or 1 bit
- Rate matching indicator - 0, 1, or 2 bits
- Zero power (ZP) channel state information (CSI)-reference signal (RS) trigger - 0, 1, or 2 bits
For transport block 1:
- Modulation and coding scheme - 5 bits
- New data indicator - 1 bit
- Redundancy version - 2 bits
For transport block 2:
- Modulation and coding scheme - 5 bits
- New data indicator - 1 bit

(continued)

- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication - 0 or 3 bits
- SRS request - 2 bits
- CBG transmission information - 0, 2, 4, 6, or 8 bits
- CBG flushing out information - 0 or 1 bit
- DMRS sequence initialization - 1 bit

Hereinafter, a downlink control channel in a 5G system will be described in more detail with reference to the accompanying drawings.

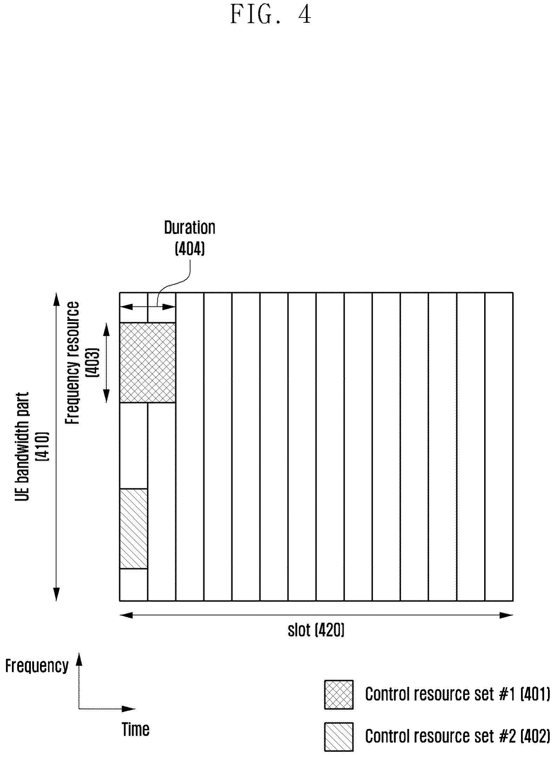

FIG. 4 illustrates an example of a control resource set (CORESET) used to transmit a downlink control channel in a 5G system. FIG. 4 illustrates an example in which a UE bandwidth part 410 is configured along the frequency axis, and two control resource sets (control resource set #1 401 and control resource set #2 402) are configured within one slot 420 along the time axis. The control resource sets 401 and 402 may be configured in a specific frequency resource 410 within the entire UE bandwidth part 403 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G described above may be configured for a UE by a base station through higher layer signaling (for example, system information, MIB, RRC signaling, etc.). The description that a control resource set is configured for a UE means that information such as a control resource set identity, the control resource set's frequency location, and the control resource set's symbol duration is provided. For example, the control resource set may include the following pieces of information: given in Table 8 below.

[Table 8]

ConControlResourceSet  ::=                              SEQUENCE  {

```
-- Corresponds to L1 parameter 'CORESET-ID'

controlResourceSetId              ControlResourceSetId,

(control resource set identity)

frequencyDomainResources          BIT STRING (SIZE (45)),

 (frequency domain resource assignment information)

duration                          INTEGER (1..maxCoReSetDuration),

(time domain resource assignment information)

cce-REG-MappingType      CHOICE {

(CCE-to-REG mapping type)

interleaved              SEQUENCE {


  reg-BundleSize                  ENUMERATED {n2, n3, n6},

(REG bundle size)

  precoderGranularity             ENUMERATED {sameAsREG-bundle, allConti

guousRBs},


  interleaverSize                 ENUMERATED {n2, n3, n6}

(interleaver size)


  shiftIndex             INTEGER(0..maxNrofPhysicalResourceBlocks-1)      O P T I

ONAL

  (interleaver shift)

  },
```

```
    nonInterleaved                    NULL

    },

    tci-StatesPDCCH                   SEQUENCE(SIZE  (1..maxNrofTCI-StatesPDCC

H))  OF  TCI-StateId                  OPTIONAL,

(QCL configuration information)

    tci-PresentInDCI        ENUMERATED  {enabled}        OPTIONAL,        - Need S

    }
```

In Table 8, tci-StatesPDCCH (simply referred to as transmission configuration indication (TCI) state) configuration information may include information of one or multiple SS/PBCH block indexes or channel state information reference signal (CSI-RS) indexes, which are quasi-co-located (OCLed) with a DMRS transmitted in a corresponding control resource set.

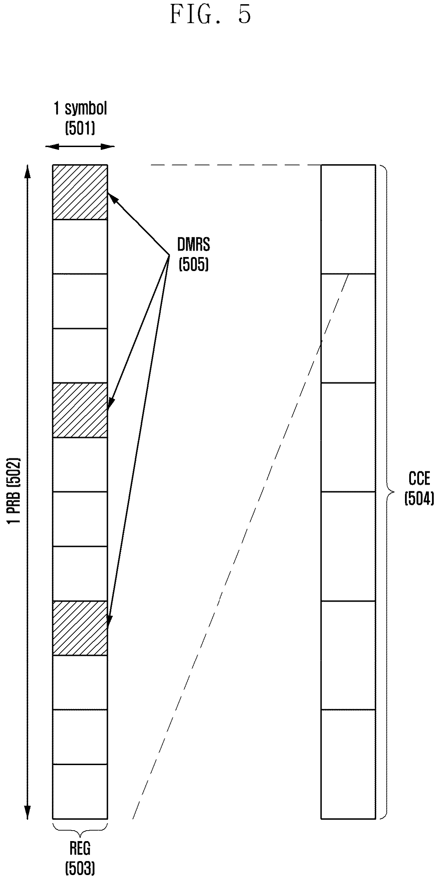

FIG. 5 illustrates an example of a basic unit of time and frequency resources constituting a downlink control channel available in a 5G system. According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In a 5G system, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like.

For example, the control resource set may include the following pieces of information: given in Table 9 below.

[Table 9]

```
SearchSpace  ::=                          SEQUENCE {
-- Identity of the search space. SearchSpaceId = 0 identifies the SearchSpace confi
gured via PBCH (MIB) or ServingCellConfigCommon.
searchSpaceId                      SearchSpaceId,
(search space identity)
controlResourceSetId               ControlResourceSetId,
(control resource set identity)
monitoringSlotPeriodicityAndOffset    CHOICE {
(monitoring slot level periodicity)
sl1                       NULL,
sl2                       INTEGER (0..1),
sl4                       INTEGER (0..3),
sl5                       INTEGER (0..4),
sl8                       INTEGER (0..7),
sl10                      INTEGER (0..9),
sl16                      INTEGER (0..15),
sl20                      INTEGER (0..19)
}                         OPTIONAL,
duration (monitoring duration)          INTEGER (2..2559)
monitoringSymbolsWithinSlot    BIT STRING (SIZE (14))            O
PTIONAL,
(monitoring symbols within slot)
nrofCandidates                    SEQUENCE {
(number of PDCCH candidates for each aggregation level)
aggregationLevel1        ENUMERATED {n0, n1, n2, n3, n4, n5, n6, n8},
aggregationLevel2        ENUMERATED {n0, n1, n2, n3, n4, n5, n6, n8},
aggregationLevel4        ENUMERATED {n0, n1, n2, n3, n4, n5, n6, n8},
aggregationLevel8        ENUMERATED {n0, n1, n2, n3, n4, n5, n6, n8},
aggregationLevel16       ENUMERATED {n0, n1, n2, n3, n4, n5, n6, n8}
},

searchSpaceType                  CHOICE {
```

```
(search space type)

-- Configures this search space as common search space (CSS) and DCI formats to monitor.

common                              SEQUENCE {

(common search space)

}

ue-Specific                         SEQUENCE {

(UE-specific search space)

-- Indicates whether the UE monitors in this USS for DCI formats 0-0 and 1-0 or for formats

0-1 and 1-1.

formats                             ENUMERATED  {formats0-0-And-1-0,  formats0

-1-And-1-1},

...

}
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI

- DCI format 1_0/1_1 with CRC scrambled by C-RNTI, CS-RNTI, TC-RNTI

Enumerated RNTIs may follow the definition and usage given below.

Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for physical uplink control channel (PUCCH) RNTI (TPC-PUCCH-RNTI): used to indicate a power control command regarding a PUCCH

Transmit power control for sounding reference signal (SRS) RNTI (TPC-SRS-RNTI): used to indicate a power control command regarding an SRS

The DCI formats enumerated above may follow the definitions given in Table 10 below, for example.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM s ymbol(s) where UE may assume no transmission is inte nded for the UE |
| 2_2 | Transmission of TPC commands for PUCCH and PUSC H |
| 2_3 | Transmission of a group of TPC commands for SRS tr ansmissions by one or more UEs |

In a 5G system, the search space at aggregation level L in connection with CORESET p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- L: aggregation level
- $n_{CI}$: carrier index
- $N_{CCE,p}$: total number of CCEs existing in control resource set $p$

- $n_{s,f}^{\mu}$ : slot index

- $M_{s,max}^{(L)}$ : number of PDCCH candidates at aggregation level L

- $m_{s,n_{CI}} = 0, \ldots, M_{s,max}^{(L)} - 1$ : PDCCH candidate index at aggregation level L
- $i = 0, ..., L - 1$

- $Y_{p,n_{s,f}^{\mu}} = \left( A_p \cdot Y_{p,n_{s,f}^{\mu}-1} \right) mod D$ , $Y_{p,-1} = N_{RNTI} \neq 0$, $A_p = 39827$ *for pmod3 = 0*, $A_p = 39829$ *for pmod3 = 1*, $A_p = 39839$ *for pmod3 = 2*, $D = 65537$
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In a 5G system, multiple search space sets may be configured by different parameters (for example, parameters in Table 9), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

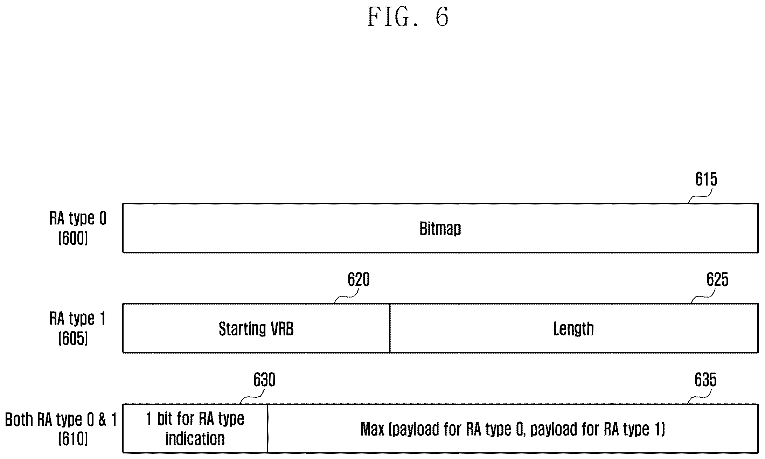

FIG. 6 illustrates an example of frequency domain resource allocation with regard to a PDSCH or PUSCH in a 5G system.

FIG. 6 illustrates three frequency domain resource allocation methods of type-0 600, type-1 605, and dynamic switch 610 which can be configured through an upper layer in an NR wireless communication system.

Referring to FIG. 6, in the case in which a UE is configured to use only resource type-0 through upper layer signaling (600), partial downlink control information (DCI) for allocating a PDSCH to the UE include a bitmap including $N_{RBG}$ bits. Here, $N_{RBG}$ may refer to the number of resource block groups (RBGs) determined according to the BWP size allocated by a BWP indicator and upper layer parameter rbg-Size, as in Table 11 below, and data is transmitted in RBGs indicated as "1" by the bitmap.

[Table 11]

| Bandwidth Part Size | Configuration 1 | Configuration 2 |
|---|---|---|
| 1 - 36 | 3 | 4 |
| 37 - 72 | 4 | 8 |
| 73 - 144 | 8 | 16 |
| 145 - 275 | 16 | 16 |

The BWP size refers to the number of RBs included in the BWP. More specifically, if resource allocation type-0 is indicated, the length of a frequency domain resource assignment (FDRA) field of DCI received by the UE is equal to the number $N_{RBG}$ of RBGs, and is $N_{RBG} = \lceil (N_{BWP}^{size} + (N_{BWP}^{start} \bmod P)) / P \rceil$. Here, the first RBG includes $RBG_0^{size} = P - N_{BWP}^{size} \bmod P$ RBs, and the last RBG includes $RBG_{last}^{size} = (N_{BWP}^{start} + N_{BWP}^{size}) \bmod P$ RBs if $(N_{BWP}^{start} + N_{BWP}^{size}) \bmod P > 0$, and otherwise, includes $RBG_{last}^{size} = P$ RBs. The other RBGs each include P RBs. Here, P refers to the number of nominal RBGs as determined according to Table 11.

If the UE is configured to use only resource allocation type-1 through higher layer signaling (7-05), some DCI for allocating PDSCHs to the UE may include frequency domain resource allocation information including $\lceil log_2(N_{RB}^{DL,BWP}(N_{RB}^{DL,BWP} + 1)/2) \rceil$ bits. Here, $N_{RB}^{BWP}$ denotes the number of RBs included in a BWP. The base station may thereby configure a starting virtual resource block (starting VRB) 620 and the length 625 of a frequency domain resource allocated continuously therefrom.

In the case in which the UE is configured to use both resource allocation type-0 and resource allocation type-1 through higher layer signaling (610), partial DCI for allocating a PDSCH to the corresponding UE includes frequency domain resource allocation information including as many bits as the larger value 615 between the payload 635 for configuring resource allocation type-0 and the payload 620 and 625 for configuring resource allocation type-1. The conditions for this will be described again later. One bit may be added to the foremost part (MSB) of the frequency domain resource allocation information inside the DCI, and if the bit has the value of "0", use of resource allocation type-0 may be indicated, and if the bit has the value of "1", use of resource allocation type-1 may be indicated.

Hereinafter, a time domain resource allocation method regarding a data channel in a 5G system will be described.

A base station may configure a table for time domain resource allocation information regarding a PDSCH and a PUSCH for a UE through higher layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a time point at which a PDCCH is received and a time point at which a PDSCH scheduled by the received PDCCH is transmitted; labeled K0), PDCCH-to-PUSCH slot timing (for example, corresponding to a slot-unit time interval between a time point at which a PDCCH is received and a time point at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 12 or Table 13 below may be transmitted from the base station to the UE.

[Table 12]

| PDSCH-TimeDomainResourceAllocationList information element |
|---|
| PDSCH-TimeDomainResourceAllocationList ::=    SEQUENCE (SIZE(1..maxNrofDL-Allocations)) OF PDSCH-TimeDomainResourceAllocation<br><br>PDSCH-TimeDomainResourceAllocation ::=        SEQUENCE {<br>　　k0            INTEGER(0..32)            OPTIONAL,    -- Need S<br>　　(PDCCH-to-PDSCH timing, slot unit)<br>　　mappingType            ENUMERATED {typeA, typeB},<br>　　(PDSCH mapping type)<br>　　startSymbolAndLength            INTEGER (0..127)<br>　　(start symbol and length of PDSCH)<br>}        |

[Table 13]

| PUSCH-TimeDomainResourceAllocationList information element |
|---|
| PUSCH-TimeDomainResourceAllocationList ::=   SEQUENCE (SIZE(1..maxNrofUL-Allocations)) OF PUSCH-TimeDomainResourceAllocation<br><br>PUSCH-TimeDomainResourceAllocation ::=        SEQUENCE {<br>　　k2            INTEGER(0..32)            OPTIONAL,    -- Need S<br>　　(PDCCH-to-PUSCH timing, slot unit)        |

```
        mappingType                ENUMERATED {typeA, typeB},

                        (PUSCH mapping type)

        startSymbolAndLength          INTEGER (0..127)

                    (start symbol and length of PUSCH)

                                    }
```

The base station may notify the UF of one of the entries of the table regarding time domain resource allocation information described above through L1 signaling (for example, DCI)(for example, "time domain resource allocation" field in DCI may indicate the same). The UE may acquire time domain resource allocation information regarding a PDSCH or PUSCH, based on the DCI acquired from the base station.

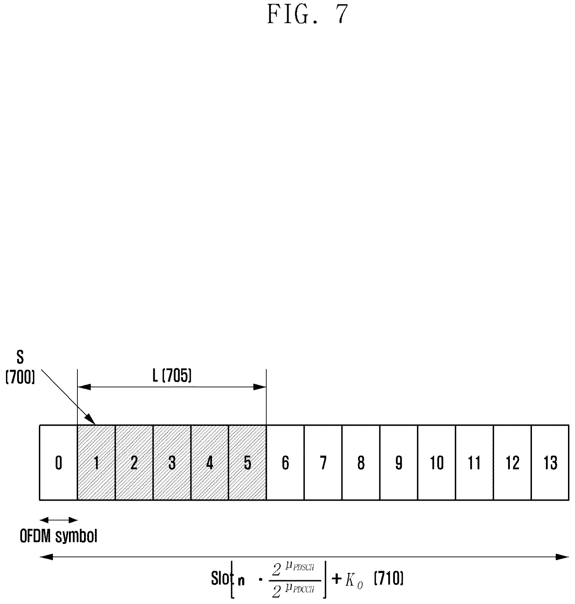

FIG. 7 illustrates an example of time domain resource allocation with regard to a PDSCH in a 5G system.

Referring to FIG. 7, the UE may indicate the time domain location of a PDSCH resource according to the subcarrier spacing (SCS) ($\mu_{PDSCH}$, $\mu_{PDCCH}$) of a data channel and a control channel configured by using an upper layer, the scheduling offset (K0) value, and the OFDM symbol start location 700 and length 705 within one slot dynamically indicated through DCI.

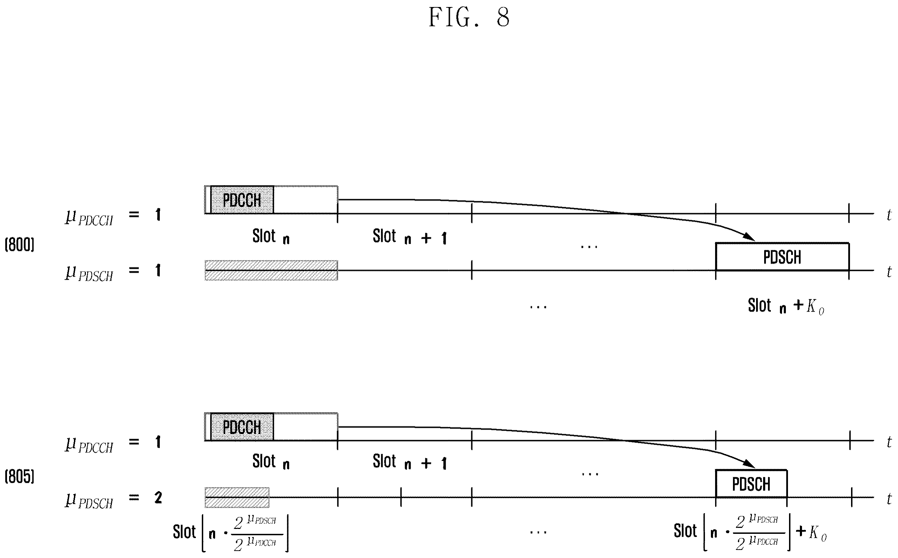

FIG. 8 illustrates an example of time domain resource allocation according to a subcarrier spacing with regard to a data channel and a control channel in a 5G system.

Referring to FIG. 8, if the data channel and the control channel have the same subcarrier spacing (800, $\mu_{PDSCH}$ =$\mu_{PDCCH}$), the slot number for data and that for control are identical, and the base station and the UE may accordingly generate a scheduling offset in conformity with a predetermined slot offset K0. On the other hand, if the data channel and the control channel have different subcarrier spacings (805, $\mu_{PDSCH} \neq \mu_{PDCCH}$), the slot number for data and that for control are different, and the base station and the UE may accordingly generate a scheduling offset in conformity with a predetermined slot offset K0 with reference to the subcarrier spacing of the PDCCH.

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 15 through higher signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 14 through upper signaling. If PUSCH transmission is operated by a configured grant, parameters applied to the PUSCH transmission are applied through configuredGrantConfig (upper signaling) in Table 14 except for dataScramblingIdentityPUSCH, txConfig, codebookSubset, maxRank, and scaling of UCI-OnPUSCH, which are provided by pusch-Config (upper signaling) in Table 15. If provided with transformPrecoder inside configuredGrantConfig (upper signaling) in Table 14, the UE applies tp-pi2BPSK inside pusch-Config in Table 15 to PUSCH transmission operated by a configured grant.

[Table 14]

```
ConfiguredGrantConfig ::=              SEQUENCE {

    frequencyHopping                                    ENUMERATED  {intraSlot,  interSlot}
OPTIONAL,    -- Need S,

    cg-DMRS-Configuration              DMRS-UplinkConfig,

    mcs-Table                                ENUMERATED  {qam256,  qam64LowSE}
OPTIONAL,    -- Need S

    mcs-TableTransformPrecoder               ENUMERATED  {qam256,  qam64LowSE}
OPTIONAL,    -- Need S

    uci-OnPUSCH                            SetupRelease  {  CG-UCI-OnPUSCH  }
OPTIONAL,    -- Need M

    resourceAllocation                      ENUMERATED  {  resourceAllocationType0,
resourceAllocationType1, dynamicSwitch },

    rbg-Size                                         ENUMERATED  {config2}
OPTIONAL,    -- Need S
```

```
            powerControlLoopToUse              ENUMERATED {n0, n1},

            p0-PUSCH-Alpha                     P0-PUSCH-AlphaSetId,

            transformPrecoder                          ENUMERATED  {enabled,  disabled}
OPTIONAL,    -- Need S

            nrofHARQ-Processes                 INTEGER(1..16),

            repK                               ENUMERATED {n1, n2, n4, n8},

            repK-RV                                    ENUMERATED {s1-0231, s2-0303, s3-0000}
OPTIONAL,    -- Need R

            periodicity                        ENUMERATED {

                                                       sym2,    sym7,    sym1x14,    sym2x14,
sym4x14, sym5x14, sym8x14, sym10x14, sym16x14, sym20x14,

                                                       sym32x14,       sym40x14,       sym64x14,
sym80x14, sym128x14, sym160x14, sym256x14, sym320x14, sym512x14,

                                                       sym640x14, sym1024x14, sym1280x14,
sym2560x14, sym5120x14,

                                                       sym6,  sym1x12,  sym2x12,  sym4x12,
sym5x12, sym8x12, sym10x12, sym16x12, sym20x12, sym32x12,

                                                       sym40x12,       sym64x12,       sym80x12,
sym128x12, sym160x12, sym256x12, sym320x12, sym512x12, sym640x12,

                                                       sym1280x12, sym2560x12

            },

            configuredGrantTimer                                       INTEGER   (1..64)
OPTIONAL,    -- Need R

            rrc-ConfiguredUplinkGrant          SEQUENCE {
```

```
                timeDomainOffset                    INTEGER (0..5119),

                timeDomainAllocation                INTEGER   (0..15),

                frequencyDomainAllocation           BIT STRING (SIZE(18)),

                antennaPort                         INTEGER (0..31),

                dmrs-SeqInitialization                              INTEGER   (0..1)
OPTIONAL,      -- Need R

                precodingAndNumberOfLayers          INTEGER (0..63),

                srs-ResourceIndicator                              INTEGER   (0..15)
OPTIONAL,      -- Need R

                mcsAndTBS                           INTEGER (0..31),

                frequencyHoppingOffset         INTEGER (1.. maxNrofPhysicalResourceBlocks-1)
OPTIONAL,      -- Need R

                pathlossReferenceIndex                             INTEGER  (0..maxNrofPUSCH-
PathlossReferenceRSs-1),

        ...

    }                      OPTIONAL,     -- Need R

    ...

}
}
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 15, which is upper signaling, is"codebook" or "nonCodebook",

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 15, the UE does not expect scheduling through DCI format 0_1.

[Table 15]

```
PUSCH-Config ::=                            SEQUENCE {

      dataScramblingIdentityPUSCH                               INTEGER    (0..1023)
OPTIONAL,     -- Need S

      txConfig                                    ENUMERATED {codebook, nonCodebook}
OPTIONAL,     -- Need S

      dmrs-UplinkForPUSCH-MappingTypeA            SetupRelease { DMRS-UplinkConfig }
OPTIONAL,     -- Need M

      dmrs-UplinkForPUSCH-MappingTypeB            SetupRelease { DMRS-UplinkConfig }
OPTIONAL,     -- Need M


      pusch-PowerControl                                        PUSCH-PowerControl
OPTIONAL,     -- Need M

      frequencyHopping                              ENUMERATED {intraSlot, interSlot}
OPTIONAL,     -- Need S

      frequencyHoppingOffsetLists       SEQUENCE (SIZE (1..4)) OF INTEGER (1..
maxNrofPhysicalResourceBlocks-1)
```

```
OPTIONAL,    -- Need M

    resourceAllocation                          ENUMERATED  {  resourceAllocationType0,

resourceAllocationType1, dynamicSwitch},

    pusch-TimeDomainAllocationList                          SetupRelease   {   PUSCH-

TimeDomainResourceAllocationList }           OPTIONAL,    -- Need M

    pusch-AggregationFactor                          ENUMERATED  {  n2,  n4,  n8  }

OPTIONAL,    -- Need S

    mcs-Table                          ENUMERATED  {qam256, qam64LowSE}

OPTIONAL,    -- Need S

    mcs-TableTransformPrecoder                          ENUMERATED  {qam256, qam64LowSE}

OPTIONAL,    -- Need S

    transformPrecoder                          ENUMERATED  {enabled,  disabled}

OPTIONAL,    -- Need S

    codebookSubset                                                   ENUMERATED

{fullyAndPartialAndNonCoherent, partialAndNonCoherent,nonCoherent}

        OPTIONAL, -- Cond codebookBased

    maxRank                    INTEGER (1..4)                          OPTIONAL, --

Cond codebookBased

    rbg-Size                                          ENUMERATED  {   config2}

OPTIONAL, -- Need S

    uci-OnPUSCH                  SetupRelease { UCI-OnPUSCH}                  OPTIONAL, -

- Need M
```

```
    tp-pi2BPSK                                              ENUMERATED    {enabled}

OPTIONAL, -- Need S

   ...


}
```

Hereinafter, codebook-based PUSCH transmission will be described. The codebook-based PUSCH transmission may be dynamically scheduled through DCI format 0_0 or 0_1, and may be semi-statically operated by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRI field in DCI or configured through srs-ResourceIndicator (higher signaling). During codebook-based PUSCH transmission, the UE has at least one SRS resource configured therefor, and may have a maximum of two SRS resources configured therefor. If the UE is provided with an SRI through DCI, the SRS resource indicated by the SRI refers to the SRS resource corresponding to the SRI among SRS resources transmitted prior to the PDCCH including the SRI. In addition, the TPMI and the transmission rank may be given through "precoding information and number of layers" (a field inside DCI) or configured through precodingAndNumberOfLayers (upper signaling). The TPMI is used to indicate a precoder to be applied to PUSCH transmission. If a single SRS resource is configured for the UE, the TPMI is used to indicate a precoder to be applied in the single SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (upper signaling). In connection with codebook-based PUSCH transmission, the UE determines a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "nonCoherent", based on UE capability reported by the UE to the base station. If the UE reported "partialAndNonCoherent'" as UE capability, the UE does not expect that the value of codebookSubset (upper signaling) will be configured as "fullyAndPartialAndNonCoherent". If the UE reported "partialAndNonCoherent'" as UE capability, the UE does not expect that the value of codebookSubset (upper signaling) will be configured as "fullyAndPartialAndNonCoherent", If nrofSRS-Ports inside SRS-ResourceSet (upper signaling) indicates two SRS antenna ports, the UE does not expect that the value of codebookSubset (upper signaling) will be configured as "partialAndNonCoherent".

The UE may have one SRS resource set configured therefor, wherein the value of usage inside SRS-ResourceSet (upper signaling) is "codebook", and one SRS resource may be indicated through an SRI inside the corresponding SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical for all SRS resources.

The UE transmits, to the base station, one or multiple SRS resources included in the SRS resource set wherein the value of usage is configured as "codebook" according to upper signaling, and the base station selects one from the SRS resources transmitted by the UE and instructs the UE to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be semi-statically operated by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (higher signaling) is "aperiodic", the connected NZP CSI-RS may be indicated by an SRS request which is a field inside DCI format 0_1 or 1_1. If the connected NZP CSI-RS resource is an aperiodic NZP CSI-RS resource, the existence of the connected NZP CSI-RS is indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is located in the slot used to transmit the PDCCH including the SRS request field. In this case, TCI states configured for the scheduled subcarrier are not configured as QCL-TypeD.

If a periodic or semi-persistent SRS resource set is configured, the associated NZP CSI-RS may be indicated through associatedCSI-RS inside SRS-ResourceSet (higher signaling). With regard to non-codebook-based transmission, the UE does not expect that spatialRelationInfo, which is upper signaling regarding the SRS resource, and associatedCSI-RS inside SRS-ResourceSet, which is upper signaling, will be configured together.

If multiple SRS resources are configured for the UE, the UE may determine a precoder to be applied to PUSCH transmission and the transmission rank, based on an SRI indicated by the base station. The SRI may be indicated through the SRI field in DCI or configured through srs-ResourceIndicator (upper signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

Hereinafter, embodiments of the disclosure will be described in detail in conjunction with the accompanying drawings. The contents of the disclosure may be applied to FDD and TDD systems. As used herein, higher signaling (or higher layer signaling) may refer to a method for transferring signals from a base station to a UE by using a downlink data channel of a physical layer, or from the UE to the base station by using an uplink data channel of the physical layer, and a specific example may be as given below.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

Furthermore, in describing the disclosure, a detailed description of known functions or configurations incorporated herein will be omitted when it is determined that the description may make the subject matter of the disclosure unnecessarily unclear. Also, the terms which will be described below are terms defined in consideration of the functions in the disclosure, and may be different according to users, intentions of the users, or customs. Therefore, the definitions of the terms should be made based on the contents throughout the specification.

In the following description of the disclosure, higher layer signaling may refer to signaling corresponding to at least one signaling among the following signaling, or a combination of one or more thereof.

- MIB
- System information block (SIB) or SIB X (X=1, 2, ...)
- RRC
- Medium access control (MAC) control element (CE)
- Packet data convergence protocol (PDCP) signaling

In addition, L1 signaling may refer to signaling corresponding to at least one signaling method among signaling methods using the following physical layer channels or signaling, or a combination of one or more thereof.

- PDCCH
- DCI
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- PUCCH
- Uplink control information (UCI)

Also, in the folowing. a DCI format may refer to DCI to which a specific DCI format is applied.

Hereinafter, described is waveform switching that a UE uses when transmitting a PUSCH.

A base station may configure, for a UE, a waveform that is available when transmitting a PUSCH. The waveform is one of CP-OFDM or DFT-S-OFDM. The UE may transmit a PUSCH according to the configured waveform. In this case, the UE is unable to perform PUSCH transmission using a waveform other than the configured waveform.

For example, when CP-OFDM is configured for the UE, the UE needs to transmit a PUSCH by using the configured CP-OFDM even in a situation where the uplink coverage of the UE is insufficient. Therefore, even though using DFT-S-OFDM enables wider uplink coverage, the UE may use only the configured CP-OFDM for PUSCH transmission.

When DFT-S-OFDM is configured for the UE, an uplink channel of the UE is improved to enable transmission with a plurality of MIMO layers, but the UE needs to transmit a PUSCH via transmission with a single MIMO layer by using the configured DFT-S-OFDM. Therefore, the throughput of the UE may be limited.

To solve this problem, a DCI format scheduling a PUSCH may include a PUSCH waveform switching indicator field. The UE may receive the DCI format, and may determine a waveform to be used when transmitting a PUSCH.

To this end, a UE capability report of the corresponding UE and a higher-layer signaling configuration from the base station may be required. A PUSCH waveform switching indicator may be 1 bit, and when the value of the corresponding field is 0, a PUSCH scheduled through corresponding DCI may be transmitted based on a DFTS-OFDM waveform, and when the value of the corresponding field is 1, the PUSCH scheduled through the corresponding DCI may be transmitted based on a CP-OFDM waveform. The value of each bit of the field is defined in the opposite manner to the above, so that when the value of the field is 1, the UE may perform PUSCH transmission based on a DFTS-OFDM waveform, and when the value of the field is 0, the UE may perform PUSCH transmission based on a CP-OFDM waveform.

When higher-layer signaling indicating that the PUSCH waveform switching indicator field is included in DCI formats 0_1 and 0_2 is not configured by the base station for the UE, the UE may determine whether to use CP-OFDM or DFTS-OFDM when transmitting a PUSCH dynamically scheduled through DCI format 0_1 or 0_2 through a parameter called transformPrecoder configured in PUSCH-Config, which is higher-layer signaling in a BWP.

- When the UE receives the transformPrecoder in the PUSCH-Config configured to enabled, the UE may use a DFTS-OFDM waveform when transmitting a PUSCH dynamically scheduled by the base station through DCI format 0_1 or 0_2.
- When the UE receives the transformPrecoder configured to disabled, the UE may use a CP-OFDM waveform when transmitting a PUSCH dynamically scheduled by the base station through DCI format 0_1 or 0_2.

The UE may determine whether to use CP-OFDM or DFTS-OFDM when the UE is activated for PUSCH transmission based on configured grant Type 2 via DCI format 0_1 or 0_2 or is configured for PUSCH transmission based on configured grant Type 1 via higher layer signaling through a parameter called transformPrecoder configured in configuredGrantConfig, which is higher-layer signaling in a BWP.

- When the UE receives the transformPrecoder in the configuredGrantConfig configured to enabled, the UE may use a DFTS-OFDM waveform when the UE is activated by the base station for PUSCH transmission based on configured grant Type 2 through DCI format 0_1 or 0_2 or is configured for PUSCH transmission based on configured grant Type 1 through higher-layer signaling.
- When the UE receives the transformPrecoder configured to disabled, the UE may use a CP-OFDM waveform when the UE is activated by the base station for PUSCH transmission based on configured grant Type 2 through DCI format 0_1 or 0_2 or is configured for PUSCH transmission based on configured grant Type 1 through higher-layer signaling.

PUSCH-Config or configuredGrantConfig may be configured for each uplink BWP. That is, transformPrecoder may be disabled in PUSCH-Config or configuredGrantConfig configured for a first uplink BWP, and transformPrecoder may be enabled in PUSCH-Config or configuredGrantConfig configured for in a second uplink BWP.

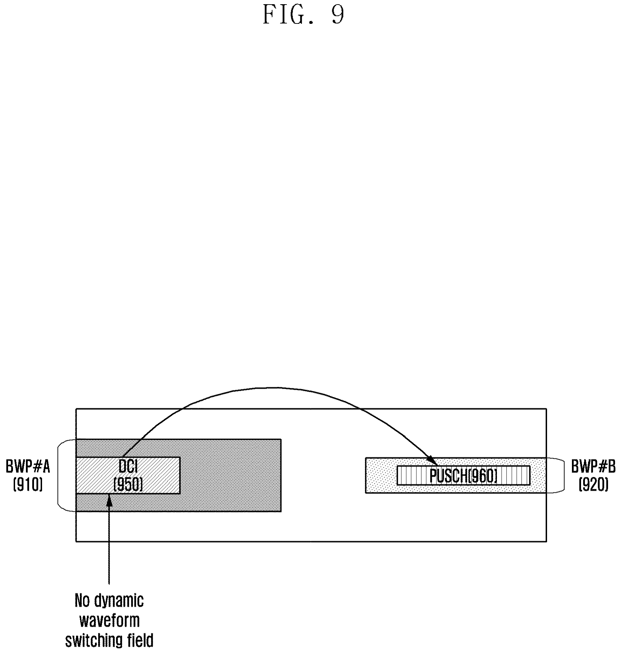

FIG. 9 illustrates an example of receiving a DCI format indicating BWP switching.

Referring to FIG. 9, an active uplink BWP may be changed through a DCI format scheduling a PUSCH received by a UE. In this case, the DCI format 950 received in a currently activated BWP (referring to a BWP 910 in which the DCI format is received) may indicate a BWP 920 to be newly activated. The DCI format may schedule a PUSCH 960 for the BWP 920 to be newly activated. In this case, the UE needs to determine a waveform for the PUSCH to be transmitted in the BWP to be newly activated.

For reference, indicating a waveform for a PUSCH in a DCI format is referred to as dynamic waveform switching.

Next, the disclosure deals with a method for determining a waveform for a PUSCH to be transmitted in a newly activated BWP. Here, dynamic waveform switching may be configured in the newly activated BWP.

A UE may be configured by a base station to enable dynamic waveform switching as follows.

The UE may be configured to enable dynamic waveform switching for each uplink BWP.

More specifically, an RRC parameter for enabling dynamic waveform switching may be added to PUSCH-Config of an uplink BWP. The name of the added RRC parameter is referred to as DynamicWaveform, and in a case where the DynamicWaveform is configured in the PUSCH-Config, when the UE monitors a PDCCH to receive DCI in a downlink BWP corresponding to the uplink BWP, 1 bit for dynamic waveform switching may be included in a DCI format of the DCI. Here, the uplink BWP and the downlink BWP with the same ID may be expressed as corresponding to each other.

Further, an RRC parameter for enabling dynamic waveform switching may be added to configuredGrantConfig of the uplink BWP. The name of the added RRC parameter is referred to as DynamicWaveform. In a case where the DynamicWaveform is configured in the configuredGrantConfig, when the UE monitors a PDCCH to receive DCI in the downlink BWP corresponding to the uplink BWP, 1 bit for dynamic waveform switching may be included in a DCI format of the DCI. Here, the uplink BWP and the downlink BWP with the same ID may be expressed as corresponding to each other.

The DCI format may schedule a dynamic PUSCH or activate a configured grant (CG) PUSCH. According to the foregoing configuration, whether dynamic waveform switching is possible for dynamic PUSCH scheduling follows the DynamicWaveform of the PUSCH-Config, but whether dynamic waveform switching is possible for the CG PUSCH follows the DynamicWaveform configured in the configuredGrantConfig. Therefore, dynamic waveform switching may be possible for one of the two, but may be impossible for the other.

When the DynamicWaveform is configured in the PUSCH-Config or the DynamicWaveform is configured in configuredGrantConfig (when either one is configured) for the UE, the UE may determine whether 1 bit indicating dynamic waveform switching is included in the DCI format scheduling the dynamic PUSCH or activating the CG PUSCH. For example, when the DynamicWaveform is configured in the PUSCH-Config for the UE and the DynamicWaveform is not configured in the configuredGrantConfig, the UE may assume that the 1 bit indicating dynamic waveform switching is always included in the DCI format. When the UE receives the DCI format and the DCI format schedules the dynamic PUSCH (is scrambled with a C-RNTI, MCS-C-RNTI, or CS-RNTI with NDI = 0), the UE may assume and interpret the 1 bit as a meaningful bit. That is, the UE may use the 1 bit to determine dynamic waveform switching for the dynamic PUSCH. When the UE receives the DCI format and the DCI format activates the CG PUSCH (is scrambled with a CS-RNTI with NDI = 0), the UE may ignore the 1 bit. That is, a waveform for the CG PUSCH may be determined according to transform-Precoder of the configuredGrantConfig regardless of the value of the 1 bit. Here, the value of the 1 bit is fixed to "0," and the value may be used to verify the validity of the DCI format that activates the CG PUSCH.

In the above example, although there is no separate division according to the DCI format, the base station may differently configure whether dynamic waveform switching is possible for each DCI format. For example, an RRC parameter DynamicWaveforDCI0_x for configuring dynamic waveform switching of DCI format 0_x may be configured in the PUSCH-Config. When the RRC parameter is configured, the UE may obtain 1 bit indicating dynamic waveform switching in DCI format 0_x. 0_x may be 0_0, 0_1, 0_2, or 0_3. Here, the RRC parameter for 0_0 may not exist.

Hereinafter, the disclosure proposes a method for determining a waveform for a PUSCH transmitted in a newly activated BWP when dynamic waveform switching is not supported in an active BWP but dynamic waveform switching is indicated in the newly activated BWP. Since dynamic waveform switching is not configured in an active BWP in which a UE monitors a PDCCH, 1 bit indicating a dynamic waveform is not included in a DCI format received through the PDCCH. However, since dynamic waveform switching is possible in a newly activated BWP, 1 bit indicating dynamic waveform switching may be needed.

According to TS 38.213 of a 3GPP standard document, a method for a UE to interpret a DCI field when a BWP is changed is described.

If a bandwidth part indicator field is configured in a DCI format, the bandwidth part indicator field value indicates the active DL BWP, from the configured DL BWP set, for DL receptions as described in [5, TS 38.212]. If a bandwidth part indicator field is configured in a DCI format, the bandwidth part indicator field value indicates the active UL BWP, from the configured UL BWP set, for UL transmissions as described in [5, TS 38.212]. If a bandwidth part indicator field is configured in a DCI format and indicates an UL BWP or a DL BWP different from the active UL BWP or DL BWP, respectively, the UE shall

- for each information field in the DCI format

  * if the size of the information field is smaller than the one required for the DCI format interpretation for the UL BWP or DL BWP that is indicated by the bandwidth part indicator, the UE prepends zeros to the information field until its size is the one required for the interpretation of the information field for the UL BWP or DL BWP prior to interpreting the DCI format information fields, respectively
  * if the size of the information field is larger than the one required for the DCI format interpretation for the UL BWP or DL BWP that is indicated by the bandwidth part indicator, the UE uses a number of least significant bits of the DCI format equal to the one required for the UL BWP or DL BWP indicated by bandwidth part indicator prior to interpreting the DCI format information fields, respectively

- set the active UL BWP or DL BWP to the UL BWP or DL BWP indicated by the bandwidth part indicator in the DCI format

According to the standard document, a DCI format received by the UE in a BWP in which no dynamic waveform switching is configured does not include a 1-bit dynamic waveform switching field, but a DCI format of a newly activated BWP needs a 1-bit dynamic waveform switching field, and thus the UE may obtain a dynamic waveform switching field with 1 bit configured to "0" according to zero padding, and may transmit a PUSCH using a waveform corresponding to "0."

In this case, when a BWP is changed, the UE always transmits a PUSCH using the waveform corresponding to "0," which may not be suitable for dynamic waveform switching. For example, DFT-S-OFDM is assumed as the waveform corresponding to "0." In this case, a base station wants to receive a PUSCH with high throughput along with a BWP change, but needs to receive the PUSCH using only DFT-S-OFDM. On the contrary, CP-OFDM is assumed as the waveform corresponding to "0." In this case, the base station wants to receive a PUSCH with wide coverage along with a BWP change, but needs to receive the PUSCH using only CP-OFDM, and thus performance deterioration may occur.

First embodiment: Configuration of waveform corresponding to value of dynamic waveform switching field

In an embodiment of the disclosure, a base station may configure a first waveform corresponding to a value "0" of a 1-bit dynamic waveform switching field for a UE. In addition, the base station may configure a second waveform corresponding to a value "1" of the 1-bit dynamic waveform switching field for the UE. Here, when the first waveform is DFT-S-OFDM, the second waveform is CP-OFDM. When the first waveform is CP-OFDM, the second waveform is DFT-S-OFDM. The base station may configure the first waveform corresponding to the value "0" of the 1-bit dynamic waveform switching field for the UE, and may not configure a second waveform corresponding to "1." In this case, the second waveform corresponding to "1" is not configured separately, but may be determined as one waveform other than the first waveform (i.e., CP-OFDM when the first waveform is DFT-S-OFDM). The base station may configure the second waveform corresponding to the value "1" of the 1-bit dynamic waveform switching field for the UE, and may not configure the first waveform corresponding to "0." In this case, the first waveform corresponding to "0" is not configured separately, but may be determined as one waveform other than the second waveform (i.e., CP-OFDM when the second waveform is DFT-S-OFDM).

When the UE receives a DCI format in a BWP in which dynamic waveform switching is configured, the UE may obtain a value of a 1-bit dynamic waveform switching field in the DCI format. When the value of the dynamic waveform switching field is "0," the UE transmits a PUSCH with the configured first waveform, and when the value is "1," the configured UE may transmit a PUSCH with the second waveform.

When the UE receives a DCI format in a BWP in which no dynamic waveform switching is configured, the DCI format may not include a 1-bit dynamic waveform switching field. When the DCI format is a DCI format that indicates a BWP change, dynamic waveform switching may be configured in a newly activated BWP. In this case, the UE may transmit a PUSCH using the first waveform corresponding to "0." For reference, the UE assumes "0" as a value of a dynamic waveform switching field, which may be a value determined according to zero padding described above.

According to this embodiment, the base station may configure a waveform to be used when changing a BWP to a dynamic waveform switching value "0" for the UE. For example, when the base station wants higher throughput when changing a BWP, the base station may configure CP-OFDM to the dynamic waveform switching value "0," and when the base station wants wider coverage, the base station may configure DFT-S-OFDM to the dynamic waveform switching value "0."

Second embodiment: Configuration of default waveform and transmission of PUSCH with configured default waveform

In an embodiment of the disclosure, a base station may configure, for a UE, a default waveform to be used for a BWP. The default waveform may be configured for each BWP. For example, the base station may configure a first waveform as a default waveform for a first BWP, and may configure a second waveform as a default waveform for a second BWP. The first waveform and the second waveform may be one of CP-OFDM and DFT-S-OFDM. The first waveform and the second waveform may be the same or different.

When the UE receives a DCI format in a BWP in which dynamic waveform switching is configured, the UE may obtain a dynamic waveform switching field from the DCI format, and transmit a PUSCH using a waveform determined according to an indication of the dynamic waveform switching field. However, when the UE receives a DCI format in a BWP in which dynamic waveform switching is not configured, the UE may not obtain a dynamic waveform switching field from the DCI. In this case, the UE may transmit a PUSCH using a default waveform. More specifically, it is assumed that the UE receives a DCI format in a BWP in which dynamic waveform switching is not configured, and the DCI format indicates a BWP change. When dynamic waveform switching is configured in a newly activated BWP, the UE needs to determine a waveform for a PUSCH through the DCI format. However, since the DCI format received by the UE includes no dynamic waveform switching field, the UE may transmit a PUSCH using the default waveform configured for the BWP.

Here, the BWP may be a BWP to be newly activated by the DCI format. That is, the base station may configure a default waveform for each BWP for the UE. When a first waveform is configured for the active BWP and a second waveform is configured for the newly activated BWP, the UE may determine a waveform for a PUSCH, based on the second waveform for the BWP to be newly activated. That is, when dynamic waveform switching is configured to the BWP to be newly activated, the base station may configure a default waveform for the BWP.

Alternatively, the BWP may be the active BWP (BWP in which the UE has received the DCI format). That is, the base station may configure a default waveform for each BWP for the UE. When a first waveform is configured for the active BWP and a second waveform is configured to the BWP to be newly activated, the UE may determine a waveform for a PUSCH, based on the first waveform for the active BWP. When dynamic waveform switching is not configured in the active BWP and dynamic waveform switching is configured in other BWPs (including the BWP to be newly activated), the base station may configure a default waveform for the active BWP.

In an embodiment of the disclosure, the UE may receive a default waveform to be used in common for all BWPs of a cell from the base station. That is, the same default waveform may be configured for all BWPs. When the UE receives a DCI format in a BWP in which dynamic waveform switching is configured, the UE may obtain a dynamic waveform switching field from the DCI format, and may transmit a PUSCH with a waveform determined according to an indication of the dynamic waveform switching field. However, when the UE receives a DCI format in a BWP in which dynamic waveform switching is not configured, the UE may not obtain a dynamic waveform switching field from the DCI format. In this case, the UE may transmit a PUSCH using the default waveform configured in common for the cell.

According to this embodiment, overhead of higher-layer signaling may be reduced compared to an embodiment in which a default waveform is configured for each BWP.

Third embodiment: Transmission of PUSCH using waveform for PUSCH used in initial cell access

When a UE receives a DCI format in a BWP in which dynamic waveform switching is configured, the UE may obtain a dynamic waveform switching field from the DCI format, and may transmit a PUSCH using a waveform determined according to an indication of the dynamic waveform switching field. However, when receiving a DCI format in a BWP in which dynamic waveform switching is not configured, the UE may not obtain a dynamic waveform switching field from the DCI. In this case, the UE may transmit a PUSCH using a waveform used in initial cell access.

The waveform used in the initial cell access is as follows.

- When the UE performs the cell access according to a four-phase RACH procedure, a waveform for an Msg-3 PUSCH for the UE may be configured in msg3-transformPrecoder in RACH-ConfigCommon from rach-ConfigCommon. The UE may determine a waveform for a PUSCH to be transmitted in a newly activated BWP, based on the waveform configured in the msg3-transformPrecoder.
- When the UE performs the cell access according to a two-phase RACH procedure, a waveform for an Msg-A PUSCH for the UE may be configured in msgA-transformPrecoder. The UE may determine a waveform for a PUSCH to be transmitted in a newly activated BWP, based on the waveform configured in the msgA-transformPrecoder. When the msgA-transformPrecoder is not configured for the UE, the UE may determine a waveform for a PUSCH to be transmitted in a newly activated BWP, based on a waveform configured in msg3-transformPrecoder.
- Alternatively, regardless of an RACH procedure performed (i.e., regardless of whether the cell access is performed according to the four-phase RACH procedure or the two-phase RACH procedure), the UE may determine a waveform for a PUSCH to be transmitted in a newly activated BWP, based on a waveform configured in msg3-transformPrecoder.

Fourth embodiment: Indication of waveform using remaining bit of DCI

In an embodiment of the disclosure, when a UE receives a DCI format in a BWP in which dynamic waveform switching is configured, the UE may obtain a dynamic waveform switching field from the DCI format, and may transmit a PUSCH with a waveform determined according to an indication of the dynamic waveform switching field. However, when the UE receives a DCI format in a BWP in which dynamic waveform switching is not configured, the UE may not obtain a dynamic waveform switching field from the DCI. In this case, the UE may repurpose some bits of the received DCI format, and may interpret and use the same as a dynamic waveform switching field. Here, the dynamic waveform switching field may be 1 bit.

For example, in a DCI format received in an active BWP, in addition to a DCI field, padding bits may exist to adjust the length. The UE may interpret and use one bit of the padding bits as a dynamic waveform switching field.

For example, the UE may repurpose 1 bit among fields, for example, an HARQ process number field, an RV field, and a MCS field, existing in the DCI format received in the active BWP, and may interpret the 1 bit as a dynamic waveform switching field. The UE may interpret the remaining bits, excluding the repurposed bit, as original fields (e.g., the HARQ process number field, the RV field, and the MCS field). Preferably, the UE may repurpose 1 bit of a most significant bit (MSB) of a specific field, and may interpret the bit as a dynamic waveform switching field.

Fifth embodiment: Always including dynamic waveform switching field in DCI

In an embodiment of the disclosure, when dynamic waveform switching is configured in at least one BWP of a cell, a UE may assume that a DCI format monitored in all BWPs of the cell includes a dynamic waveform switching field. That is, a DCI format monitored by the UE in a BWP in which dynamic waveform switching is not configured does not need a dynamic waveform switching field, but the UE may assume that the DCI format includes a dynamic waveform switching field.

According to this embodiment, when the UE receives a DCI format in a BWP in which dynamic waveform switching is configured, the UE may obtain a dynamic waveform switching field from the DCI format, and may transmit a PUSCH with a waveform determined according to an indication of the dynamic waveform switching field. In addition, even though the UE receives a DCI format in a BWP in which the dynamic waveform switching is not configured, the UE may obtain a dynamic waveform switching field from the DCI. Therefore, a problem of not obtaining a dynamic waveform switching field when a BWP is changed may not occur.

Here, when dynamic waveform switching is configured for at least one BWP of a cell for the UE, the base station may configure a DCI format monitored in all BWPs of the cell to include a dynamic waveform switching field. For example, when the base station is able to indicate whether a DCI format includes a dynamic waveform switching field for each BWP, the base station needs to commonly indicate whether a dynamic waveform switching field is included for all BWPs. The UE may not expect that whether different dynamic waveform switching fields for different BWPs are included is configured for the UE.

Sixth embodiment: Determination of waveform according to FDRA type

A UE may determine a frequency domain resource assignment (FDRA) type for a PUSCH to be transmitted in a newly activated BWP. FDRA types may include Type-0 and Type-1. Type-0 is a method of indicating RBs scheduled based on a bitmap, and Type-1 is a method of indicating consecutive RBs based on a resource indication value (RIV). Both Type-0 and Type-1 may be used in CP-OFDM, but only Type-1 may be used in DFT-S-OFDM.

The UE may determine the type of an FDRA field according to a BWP configuration. For PUSCH transmission in a newly activated BWP, one of Type-0, Type-1, and FDRA dynamic switching may be configured. When Type-0 and Type-1 are configured, the UE may determine the type of the FDRA field according to the BWP configuration. When FDRA dynamic switching is configured, the UE may determine the type through the FDRA field. For example, 1 bit of an MSB of the FDRA field may be used to indicate one of Type-0 to Type-1.

When the UE receives a DCI format in a BWP in which dynamic waveform switching is configured, the UE may obtain a dynamic waveform switching field from the DCI format, and may transmit a PUSCH with a waveform determined according to an indication of the dynamic waveform switching field. However, when the UE receives a DCI format in a BWP in which dynamic waveform switching is not configured, the UE may not obtain a dynamic waveform switching field from the DCI format. In this case, the UE may determine a waveform using an FDRA type to transmit a PUSCH.

In an example of the disclosure, a waveform may be determined as follows.

- When an FDRA type for a newly activated BWP is Type-0, the UE may always transmit a PUSCH using CP-OFDM.
- When an FDRA type for a newly activated BWP is Type-1, the UE needs to determine one waveform among CP-OFDM and DFT-S-OFDM. In this case, the UE may determine a waveform for a PUSCH, based on one of the embodiments of the disclosure.

In an example of the disclosure, a waveform may be determined as follows.

- When an FDRA type for a newly activated BWP is Type-0, the UE may always transmit a PUSCH using CP-OFDM.
- When an FDRA type for a newly activated BWP is Type-1, the UE may always transmit a PUSCH using DFT-S-OFDM.

When FDRA dynamic switching is configured as a type of an FDRA field, the UE may determine the type of the FDRA field, based on 1 bit of an MSB of the FDRA field, and may determine a waveform for a PUSCH using the foregoing example according to the type.

In another example, when FDRA dynamic switching is configured, a waveform may be determined by the following method.

- When FDRA dynamic switching is configured for a newly activated BWP, the UE may always transmit a PUSCH using CP-OFDM. That is, since Type-0 FDRA is likely to be indicated according to the FDRA dynamic switching, the UE may transmit a PUSCH using CP-OFDM.

In another example, when dynamic switching is configured, a waveform may be determined by the following method.

- When FDRA dynamic switching is configured for a newly activated BWP, the UE may always transmit a PUSCH using CP-OFDM, and may interpret an FDRA field assuming Type-0 FDRA. That is, a CP-OFDM waveform may be used while assuming Type-0 FDRA suitable for CP-OFDM. This example may be used when the length of an FDRA field included in a DCI format is shorter than the length of an FDRA field required for a newly activated BWP. That is, when the length of the FDRA field included in the DCI format is equal to or longer than the length of the FDRA field required for the newly activated BWP, a waveform for a PUSCH may be determined based on another embodiment of the disclosure.

In another example, when dynamic switching is configured, a waveform may be determined by the following method.

- When FDRA dynamic switching is configured for a newly activated BWP, the UE may always transmit a PUSCH using DFT-S-OFDM, and may interpret an FDRA field assuming Type-1 FDRA. That is, a DFT-S-OFDM waveform may be used while assuming Type-1 FDRA suitable for DFT-S-OFDM. This example may be used when the length of an FDRA field included in a DCI format is shorter than the length of an FDRA field required for a newly activated BWP. That is, when the length of the FDRA field included in the DCI format is equal to or longer than the length of the FDRA field required for the newly activated BWP, a waveform for a PUSCH may be determined based on another embodiment of the disclosure.

In another example, when FDRA dynamic switching is configured, a waveform may be determined by the following method.

- When FDRA dynamic switching is configured for a newly activated BWP, the UE may determine a waveform or an FDRA type, based on a required length for an FDRA field when assuming an FDRA type as Type-0 and a required length for an FDRA field when assuming the FDRA type as Type-1.

For example, when the required length for the FDRA field when assuming the Type-0 is less than or equal to the required length for the FDRA field when assuming the Type-1, the UE may assume that the FDRA type is Type-0 FDRA. On the contrary, when the required length for the needed FDRA field when assuming the Type-0 is longer than the required length for the FDRA field when assuming the Type-1, the UE may assume Type-1 FDRA. That is, the UE may select an FDRA type with a shorter length.

In another method, the UE may select an FDRA type requiring a longer length for an FDRA field. In another example, the UE may select an FDRA type requiring a longer length for an FDRA field, in which case the UE may select the FDRA type requiring the longer length for the FDRA field if the required longer length for the FDRA field is equal to or shorter than the length of an FDRA field included in a DCI format, and may select an FDRA type having a shorter length otherwise.

That is, the UE may select an FDRA type having a longest length among FDRA types having a length equal to or shorter than the length of the FDRA field included in the DCI format.

The UE may determine a waveform according to a selected FDRA type, which may be determined based on one of the foregoing examples of the disclosure.

In the foregoing description, the UE may obtain a 1-bit dynamic waveform switching field from a DCI format. The disclosure illustrates a method for obtaining the 1-bit.

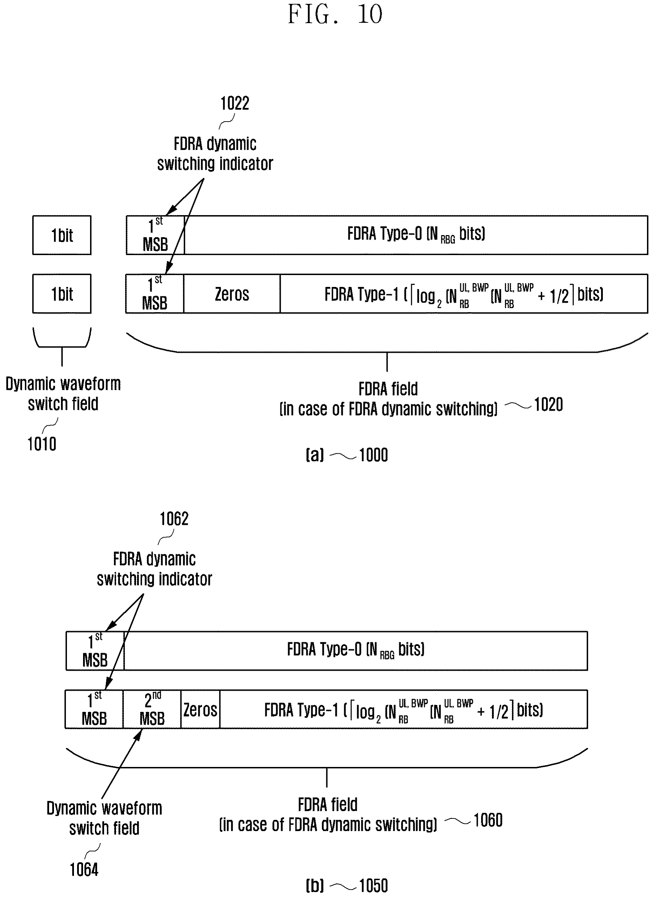

FIG. 10 illustrates an example of a configuration of an FDRA field and a dynamic waveform switching field.

According to FIG. 10, (a) 1000 is a diagram in which an FDRA field and a dynamic waveform switching field are independently configured. It is assumed that FDRA dynamic switching is configured in an active BWP of a UE. The UE may determine an FDRA type through 1 bit of an MSB 1022 of an FDRA field of a DCI format. When dynamic waveform switching is configured in the active BWP of the UE, a waveform may be indicated to the UE through a 1-bit dynamic waveform switching field 1010 in the DCI format. In this case, the lengths of the FDRA field and the 1-bit dynamic waveform switching field included in the DCI format may be as follows (1010, 1020).

$$\max\left(\left\lceil \log_2(N_{RB}^{UL,BWP}(N_{RB}^{UL,BWP}+1)/2)\right\rceil, N_{RBG}\right)+1+1$$

Here, $N_{RB}^{UL,BWP}$ is the number of RBs included in a UL BWP, and $N_{RBG}$ is the number of RBGs included in the UL BWP.

Referring to (a) 1000 of FIG. 10, the dynamic waveform switching field 1010 may be 1 bit, and the FDRA field 1020 may be $\max\left(\left\lceil \log_2(N_{RB}^{UL,BWP}(N_{RB}^{UL,BWP}+1)/2)\right\rceil, N_{RBG}\right)+1$ bits. Here, the 1 bit of the MSB 1022 indicates FDRA dynamic switching, and the remaining bits indicate frequency-domain resource allocation according to FDRA Type-0 and FDRA Type-1. In (a) 1010, $N_{RBG} > \left\lceil \log_2(N_{RB}^{UL,BWP}(N_{RB}^{UL,BWP}+1)/2)\right\rceil$ is assumed. Therefore, when FDRA-Type-1 is indicated, zero bits 1026 of $N_{RBG}$ - $\left\lceil \log_2(N_{RB}^{UL,BWP}(N_{RB}^{UL,BWP}+1)/2)\right\rceil$ bits may be included.

When CP-OFDM is indicated to the UE through the 1-bit dynamic waveform switching field, the 1 bit of the MSB of the FDRA field may indicate one FDRA type among Type-0 and Type-1. That is, the 1 bit of the MSB of the FDRA field is meaningful. When DFT-S-OFDM is indicated to the UE through the 1-bit dynamic waveform switching field, the 1 bit of the MSB of the FDRA field may indicate only a Type-1 FDRA type. That is, the 1 bit of the MSB of the FDRA field is not meaningful.

In an embodiment of the disclosure, the UE may jointly configure an FDRA field and a dynamic waveform switching field.

When an MSB of the FDRA field of a DCI format indicates Type-1 FDRA, the DCI format may have 1 bit indicating dynamic waveform switching, and when the MSB of the FDRA field indicates Type-0 FDRA, the DCI format may not include 1 bit indicating dynamic waveform switching. Here, when Type-0 FDRA is indicated, the UE may transmit a PUSCH using CP-OFDM.

More specifically, when the MSB of the FDRA field indicates Type-0 FDRA, the remaining bits of the FDRA field may be interpreted as FDRA Type-0. That is, among the remaining bits of the FDRA field, $N_{RBG}$ indicates frequency-domain scheduling information about a PUSCH. The PUSCH may be transmitted with CP-OFDM.

When the MSB of the FDRA field indicates Type-1 FDRA, 1 bit among the remaining bits of the FDRA field may be interpreted as the dynamic waveform switching field, and $\left\lceil \log_2(N_{RB}^{UL,BWP}(N_{RB}^{UL,BWP}+1)/2)\right\rceil$ bits of the remaining bits of the FDRA field (the remaining bits excluding the bit indicating FDRA switching in the FDRA field and the dynamic waveform switching field) may be interpreted as FDRA Type-1.

According to this embodiment, the lengths of the FDRA field and the 1-bit dynamic waveform switching field included in the DCI format may be as follows.

$$\max\left(\left\lceil \log_2(N_{RB}^{UL,BWP}(N_{RB}^{UL,BWP}+1)/2)\right\rceil+1, N_{RBG}\right)=1$$

(b) 1050 of FIG. 10 illustrates an example in which an FDRA field and a dynamic waveform switching field are jointly configured.

1 bit of a first MSB 1062 of the FDRA field 1060 may indicate FDRA dynamic switching. When the 1 bit of the first MSB 1062 indicates FDRA Type-0, the remaining bits of the FDRA field may be $N_{RBG}$ bits for indicating frequency-domain scheduling information about FDRA Type-0. When the 1 bit of the first MSB indicates FDRA Type-1, 1 bit of a second MSB 1064 of the FDRA field may indicate dynamic waveform switching. Further,

$$\lceil \log_2(N_{RB}^{UL,BWP}(N_{RB}^{UL,BWP}+1)/2) \rceil$$

bits among the remaining bits of the FDRA field indicate frequency-domain scheduling information about FDRA Type-1. In (b) of FIG. 10, $N_{RBG} > \lceil \log_2(N_{RB}^{UL,BWP}(N_{RB}^{UL,BWP}+1)/2) \rceil$ is assumed. Therefore, when FDRA-Type-1 is indicated, zero bits of

$$N_{RBG} - (\lceil \log_2(N_{RB}^{UL,BWP}(N_{RB}^{UL,BWP}+1)/2) \rceil + 1)$$

bits may be included.

The FDRA fields of FIG. 10 are only for illustration, and may be applied through obvious modifications.

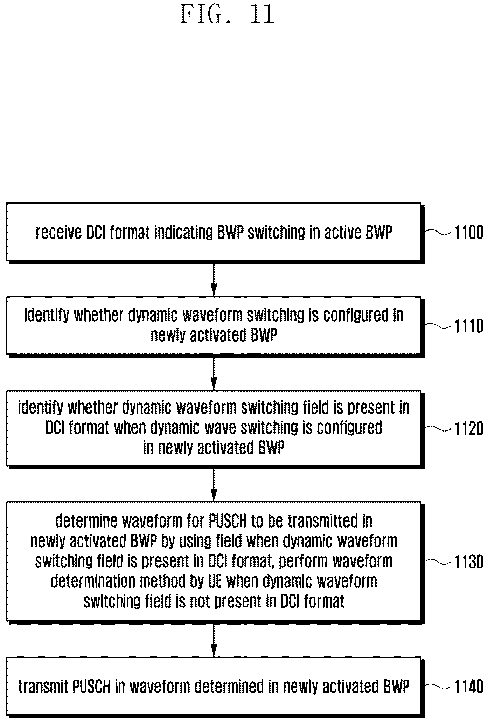

FIG. 11 illustrates an example of an operation performed by a UE according to the disclosure.

Referring to FIG. 11, although not shown, the UE may receive information configuring that dynamic waveform switching is possible for a cell or a BWP within a cell from a base station. The information may be transmitted through higher-layer signaling. Details may follow the foregoing description.

The UE may receive a DCI format indicating BWP switching in an active BWP (1100). The UE may receive the DCI format in the active BWP, the DCI format may include a BWP switching indicator field, and the field may include an index of a BWP different from the current active BWP. In this case, the UE may determine the DCI format as a BWP switching DCI format.

The UE may identify whether dynamic waveform switching is configured in a newly activated BWP (1110). Here, whether the dynamic waveform switching is configured may be configured for each BWP, and may be identified based on configuration information described above.

When the dynamic waveform switching is configured in the newly activated BWP, the UE identifies whether a dynamic waveform switching field exists in the received DCI format (1120). Here, for example, whether the dynamic waveform switching field exists in the DCI format may follow a configuration of the active BWP in which the DCI format is received. Alternatively, whether the dynamic waveform switching field exists in the DCI format may follow according to a method described above.

When the received DCI format includes the dynamic waveform switching field, the UE may determine a waveform for a PUSCH to be transmitted in the newly activated BWP by using the field. When the DCI format includes no dynamic waveform switching field, the UE determines a waveform for PUSCH transmission according to an example described above (1130).

The UE transmits a PUSCH with the waveform determined in the newly activated BWP (1140).

The foregoing flowchart illustrates an illustrative method that may be implemented according to the principles of the disclosure, and various modifications may be made to the method illustrated in the flowchart in the specification. For example, although illustrated as a series of steps, various operations in each drawing may overlap, occur in parallel, occur in different orders, or occur a plurality of times. In another example, an operation may be omitted or replaced with another operation.

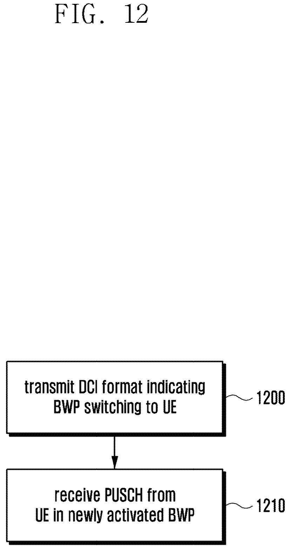

FIG. 12 illustrates an example of an operation performed by a base station according to the disclosure.

Referring to FIG. 12, although not shown, the base station may transmit information configuring that dynamic waveform switching is possible for a cell or a BWP within a cell to a UE. The information may be transmitted through higher-layer signaling. Details may follow the foregoing description.

The base station may transmit a DCI format indicating BWP switching in an active BWP to the UE (1200). The UE may receive the DCI format in the active BWP, the DCI format may include a BWP switching indicator field, and the field may include an index of a BWP different from the current active BWP. When dynamic waveform switching is configured in a BWP to be newly activated by the BWP switching indicator field, a dynamic waveform switching field may or may not exist in the DCI format according to an example described above.

The base station receives a PUSCH from the UE in the newly activated BWP (1210). Here, a waveform for the received PUSCH may be based on the transmitted DCI format. When the dynamic waveform switching field exists in the transmitted DCI format, the waveform for the PUSCH may be a waveform indicated by the field, and when the dynamic waveform switching field does not exist in the transmitted DCI format, a waveform for the PUSCH may be a waveform determined according to an example described above.

The foregoing flowchart illustrates an illustrative method that may be implemented according to the principles of the disclosure, and various modifications may be made to the method illustrated in the flowchart in the specification. For example, although illustrated as a series of steps, various operations in each drawing may overlap, occur in parallel, occur in different orders, or occur a plurality of times. In another example, an operation may be omitted or replaced with another operation.

In another example, when dynamic waveform switching in a BWP is configured for a UE, a DCI format that the UE monitors in the BWP may include a dynamic waveform switching field, and a waveform may be determined through the field. The length of the DCI fields included in the DCI format may differ depending on the foregoing two waveforms.

For example, the length of a precoding information and number of layers field, an antenna ports field, a PTRS-DMRS field, and a DMRS sequence initialization field may differ as follows when using the CP-OFDM waveform and when using the DFT-OFDM waveform in DCI format 0_1.

&#9702; Precoding information and number of layers - number of bits determined by the following- 0 bits if the higher layer parameter txConfig = nonCodeBook;

- 0 bits for 1 antenna port and if the higher layer parameter txConfig= codebook;
- 4, 5, or 6 bits according to Table 7.3.1.1.2-2 for 4 antenna ports, if txConfig = codebook, and according to whether transform precoder is enabled or disabled, and the values of higher layer parameters maxRank, and codebookSubset;
- 2, 4, or 5 bits according to Table 7.3.1.1.2-3 for 4 antenna ports, if txConfig = codebook, and according to whether transform precoder is enabled or disabled, and the values of higher layer parameters maxRank, and codebookSubset;
- 2 or 4 bits according to Table7.3.1.1.2-4 for 2 antenna ports, if txConfig = codebook, and according to whether transform precoder is enabled or disabled, and the values of higher layer parameters maxRank and codebook-Subset;
- 1 or 3 bits according to Table7.3.1.1.2-5 for 2 antenna ports, if txConfig = codebook, and according to whether transform precoder is enabled or disabled, and the values of higher layer parameters maxRank and codebook-Subset.

&#9702; Antenna ports - number of bits determined by the following

- 2 bits as defined by Tables 7.3.1.1.2-6, if transform precoder is enabled, dmrs-Type=1, and maxLength=1;
- 4 bits as defined by Tables 7.3.1.1.2-7, if transform precoder is enabled, dmrs-Type=1, and maxLength=2;
- 3 bits as defined by Tables 7.3.1.1.2-8/9/10/11, if transform precoder is disabled, dmrs-Type=1, and max-Length=1, and the value of rank is determined according to the SRS resource indicator field if the higher layer parameter txConfig = nonCodebook and according to the Precoding information and number of layers field if the higher layer parameter txConfig = codebook;
- 4 bits as defined by Tables 7.3.1.1.2-12/13/14/15, if transform precoder is disabled, dmrs-Type=1, and max-Length=2, and the value of rank is determined according to the SRS resource indicator field if the higher layer parameter txConfig = nonCodebook and according to the Precoding information and number of layers field if the higher layer parameter txConfig = codebook;
- 4 bits as defined by Tables 7.3.1.1.2-16/17/18/19, if transform precoder is disabled, dmrs-Type=2, and max-Length=1, and the value of rank is determined according to the SRS resource indicator field if the higher layer parameter txConfig = nonCodebook and according to the Precoding information and number of layers field if the higher layer parameter txConfig = codebook;
- 5 bits as defined by Tables 7.3.1.1.2-20/21/22/23, if transform precoder is disabled, dmrs-Type=2, and max-Length=2, and the value of rank is determined according to the SRS resource indicator field if the higher layer parameter txConfig = nonCodebook and according to the Precoding information and number of layers field if the higher layer parameter txConfig = codebook.

where the number of CDM groups without data of values 1, 2, and 3 in Tables 7.3.1.1.2-6 to 7.3.1.1.2-23 refers to CDM groups {0}, {0,1}, and {0, 1,2} respectively.

If a UE is configured with both dmrs-UplinkForPUSCH-MappingTypeA and dmrs-UplinkForPUSCH-Mapping-TypeB, the bitwidth of this field equals max $\{x_A, x_B\}$, where $x_A$ is the "Antenna ports" bitwidth derived according to dmrs-UplinkForPUSCH-MappingTypeA and $x_B$ is the "Antenna ports" bitwidth derived according to dmrs-UplinkForPUSCH-MappingTypeB. A number of $|x_A-x_B|$ zeros are padded in the MSB of this field, if the mapping type of the PUSCH corresponds to the smaller value of $x_A$ and $x_B$.

&#9702; PTRS-DMRS association - number of bits determined as follows

- 0 bit if PTRS-UplinkConfig is not configured and transform precoder is disabled, or if transform precoder is enabled, or if maxRank=1;
- 2 bits otherwise, where Table 7.3.1.1.2-25 and 7.3.1.1.2-26 are used to indicate the association between PTRS port(s) and DMRS port(s) when one PT-RS port and two PT-RS ports are configured by maxNrofPorts in PTRS-UplinkConfig respectively, and the DMRS ports are indicated by the Antenna ports field.

If "Bandwidth part indicator" field indicates a bandwidth part other than the active bandwidth part and the "PTRS-DMRS association" field is present for the indicated bandwidth part but not present for the active bandwidth part, the UE assumes the "PTRS-DMRS association" field is not present for the indicated bandwidth part.

- DMRS sequence initialization - 0 bit if transform precoder is enabled; 1 bit if transform precoder is disabled.

Therefore, the length of the DCI format including the dynamic waveform switching field may change depending on a waveform indicated by the field. When the DCI format has a plurality of lengths depending on waveforms, the number of blind decoding times of the UE may be increased. To prevent the increase in the number of blind decoding times, the UE needs to be able to receive the DCI format with a single DCI format length regardless of which waveform is indicated.

It is assumed that the length of a DCI format including DCI fields generated given DFT-S-OFDM is referred to as a first length and the length of a DCI format including DCI fields generated given CP-OFDM is referred to as a second length. When the first length and the second length are not the same, the base station may add "0" to a least significant bit (LSB) of a DCI format with a shorter length, thereby adjusting the DCI format to have the same length as the longer length. For example, when the first length is 40 bits and the second length is 50 bits, the base station may add 10 bits of "0" to the DCI format with the first length (the DCI format including the DCI fields generated given DFT-S-OFDM). The 10 bits of "0" may be added to the last bits (LSB) of the DCI format with the first length.

The UE may perform PDCCH monitoring to receive a DCI format, based on a longer length among the first length and the second length. When the UE successfully receives the DCI format, the UE may determine a waveform indicated through a dynamic waveform switching field and the length of DCI fields corresponding to the indicated waveform. Here, the dynamic waveform switching field needs to be located at the same bit position in the DCI format with the first length and the DCI format with the second length. That is, the dynamic waveform switching field needs to be located at a position preceding DCI fields of which the length changes according to dynamic waveform switching. For example, since the length of an FDRA field may vary depending on the indicated waveform, the dynamic waveform switching field may always be located before the FDRA field.

Preferably, the dynamic waveform switching field may be located at the following position in DCI format 0_1.

First arrangement

- Identifier for DCI formats - 1 bit
- Carrier indicator - 0 or 3 bits
- DFI flag - 0 or 1 bit
- UL/SUL indicator - 0 or 1 bit
- Bandwidth part indicator - 0, 1 or 2 bits
- Dynamic waveform switch - 0 or 1 bit
- Frequency domain resource assignment
- ...

Second arrangement

- Identifier for DCI formats - 1 bit
- Carrier indicator - 0 or 3 bits
- DFI flag - 0 or 1 bit
- UL/SUL indicator - 0 or 1 bit
- Dynamic waveform switch - 0 or 1 bit
- Bandwidth part indicator - 0, 1 or 2 bits
- Frequency domain resource assignment
- ...

Third arrangement

- Identifier for DCI formats - 1 bit
- Carrier indicator - 0 or 3 bits
- DFI flag - 0 or 1 bit
- Dynamic waveform switch - 0 or 1 bit
- UL/SUL indicator - 0 or 1 bit
- Bandwidth part indicator - 0, 1 or 2 bits
- Frequency domain resource assignment
- ...

Alternatively, it is assumed that the length of a DCI format including DCI fields generated given DFT-S-OFDM is referred to as a first length and the length of a DCI format including DCI fields generated given CP-OFDM is referred to as a second length. Here, 1 bit of a dynamic waveform switching field may always be located at the last bit of the DCI formats regardless of a waveform. When the first length is shorter than the second length, the base station may add "0" to the LSB of the remaining bits except for the last bit in the DCI format with the first length, thereby adjusting the DCI format to have the same length. For example, when the first length is 40 bits and the second length is 50 bits, 10 bits may be added to the DCI format with the first length, and the 10 bits may be added right before the last 1 bit of the DCI format with the first length.

The UE may perform PDCCH monitoring to receive a DCI format, based on a longer length among the first length and the second length. When the UE successfully receives the DCI format, the UE may determine a waveform indicated through the dynamic waveform switching field and the length of DCI fields corresponding to the indicated waveform. Here, the dynamic waveform switching field needs to be located at the same last bit position in the DCI format with the first length and the DCI format with the second length. The UE may determine the waveform, based on the last bit, and may determine the length of the DCI fields, based on the remaining bits.

When the UE receives a DCI format indicating BWP switching, dynamic waveform switching may not be configured in a newly activated BWP, but dynamic waveform switching may be configured in a currently active BWP. Here, the UE needs to assume a specific waveform in order to obtain the length of DCI fields of the DCI format.

The UE may interpret the received DCI format, based on a waveform used in the newly activated BWP. For example, when a waveform for a PUSCH scheduled for the newly activated BWP is a DFT-S-OFDM waveform, the UE may determine the length of the DCI fields of the received DCI format as a length according to the DFT-S-OFDM waveform. For example, when the waveform for the PUSCH scheduled for the newly activated BWP is a CP-OFDM waveform, the UE may determine the length of the DCI fields of the received DCI format as a length according to the CP-OFDM waveform.

Alternatively, the UE may interpret the received DCI format, based on a waveform indicated by a dynamic waveform switching field. That is, even though dynamic waveform switching is not possible in the BWP to be newly activated, the UE may use the value of the dynamic waveform switching field to determine the length of the DCI field. Here, a waveform for the PUSCH scheduled for the newly activated BWP may be determined according to a configuration of the BWP to be newly activated regardless of the value of the dynamic waveform switching field. For example, when the dynamic waveform switching field of the received DCI format indicates a DFT-S-OFDM waveform, the UE may determine the length of the DCI fields of the received DCI format as a length according to the DFT-S-OFDM waveform. For example, when the dynamic waveform switching field of the received DCI format indicates a CP-OFDM waveform, the UE may determine the length of the DCI fields of the received DCI format as a length according to the CP-OFDM waveform.

Here, the determined length of the DCI fields of the DCI format is determined based on a configuration of the currently activated BWP. The length of the DCI fields may change according to the different configurations of the currently activated BWP and the BWP to be newly activated. In this case, the UE may assume that the length of the DCI fields of the DCI format is determined based on the configuration of the activated BWP.

When the UE receives a DCI format indicating BWP switching, dynamic waveform switching may be configured in a newly activated BWP, and dynamic waveform switching may not be configured in a currently active BWP. Here, the length of DCI fields of the received DCI format may be determined based on a waveform used in the current BWP. That is, the length of a precoding information and number of layers field, an antenna ports field, a PTRS-DMRS field, and a DMRS sequence initialization field is determined based on the waveform used in the currently activated BWP.

Since dynamic waveform switching is possible in the newly activated BWP, the length of required DCI fields may vary depending on an indicated (or determined) waveform. For example, DFT-S-OFDM may be used in the currently active BWP, but CP-OFDM may be used in the newly activated BWP. Therefore, different lengths of the DCI fields may be required.

To solve this, the base station may always determine the length of the DCI fields by considering a waveform used in the currently active BWP. That is, although dynamic waveform switching is possible in the newly activated BWP, the length of the DCI fields may be obtained considering only the waveform used in the active BWP. Here, a waveform scheduled for the newly activated BWP may be the waveform used for the active BWP.

Although a method for a UE to determine the length of DCI fields of a DCI format has been described above, a base station may also generate a DCI format according to the length of DCI fields according to the same method and transmit the DCI format to a UE.

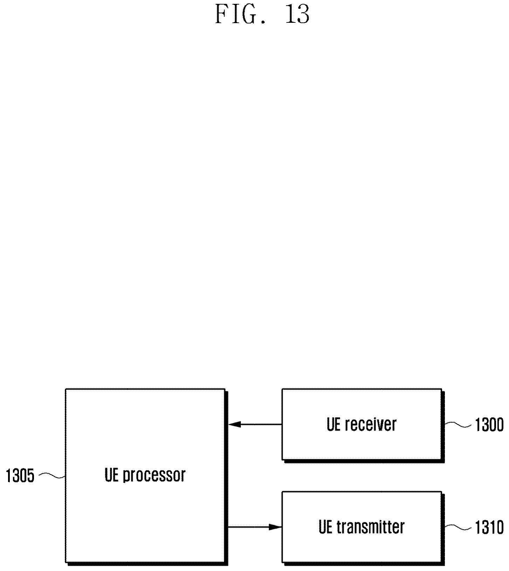

FIG. 13 illustrates a structure of a UE in a wireless communication system according to an embodiment of the disclosure.

Referring to FIG. 13, the UE may include a transceiver, which refers to a UE receiver 1300 and a UE transmitter 1310 as a whole, a memory (not illustrated), and a UE processor 1305 (or UE controller or processor). The UE transceiver 1300 and 1310, the memory, and the UE processor 1305 may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes such that the UE can operate according to the above-described embodiments. The processor may include multiple processors, and the processor may perform operations of controlling the components of the UE by executing programs stored in the memory.

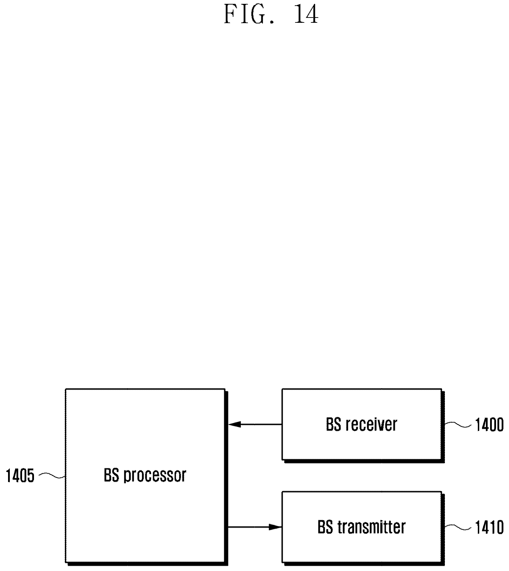

FIG. 14 illustrates a structure of a base station in a wireless communication system according to an embodiment of the disclosure.

Referring to FIG. 14, the base station may include a transceiver, which refers to a base station receiver 1400 and a base station transmitter 1410 as a whole, a memory (not illustrated), and a base station processor 1405 (or base station controller or processor). The base station transceiver 1400 and 1410, the memory, and the base station processor 1405 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes such that the base station can operate according to the above-described embodiments of the disclosure. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette.

Alternatively, any combination of some or all of them may form a memory in which the program is stored. In addition, a plurality of such memories may be included in the electronic device. Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A method performed by a terminal in a communication system, the method comprising:

   receiving, from a base station, information indicating that a waveform switching indicator for a physical uplink shared channel (PUSCH) is included in downlink control information (DCI) through higher-layer signaling;
   receiving, from the base station, the DCI scheduling the PUSCH, the DCI including the waveform switching indicator; and
   transmitting, to the base station, uplink data on the PUSCH based on the DCI, wherein, in case that the DCI includes a frequency domain resource assignment (FDRA) field and the FDRA field corresponds to resource allocation type 0, the PUSCH is transmitted based on cyclic prefix-orthogonal frequency division multiplexing (CP-OFDM).

2. The method of claim 1, wherein, in case that the DCI includes the FDRA field, a resource allocation type of the FDRA field corresponds to dynamic switching, and 1 bit of a most significant bit (MSB) of the FDRA field indicates resource allocation type 0, the PUSCH is transmitted based on the CP-OFDM.

3. The method of claim 1, wherein, in case that the DCI includes the FDRA field and a bandwidth part (BWP) indicator, a resource allocation type of an FDRA field of a BWP indicated by the BWP indicator corresponds to dynamic switching, and a length of the FDRA field is shorter than a length of the FDRA field corresponding to the indicated BWP, the PUSCH is transmitted in the indicated BWP, based on the CP-OFDM.

4. The method of claim 1, wherein, in case that the DCI is associated with a configured scheduling radio network temporary identifier (CS-RNTI) and a new data indicator (NDI) having a value of 0 is included in the DCI, the waveform switching indicator is ignored.

5. A method performed by a base station in a communication system, the method comprising:

transmitting, to a terminal, information indicating that a waveform switching indicator for a physical uplink shared channel (PUSCH) is included in downlink control information (DCI) through higher-layer signaling;
transmitting, to the terminal, the DCI scheduling the PUSCH the DCI including the waveform switching indicator; and
receiving, from the terminal, uplink data on the PUSCH scheduled by the DCI,
wherein, in case that the DCI includes a frequency domain resource assignment (FDRA) field and the FDRA field corresponds to resource allocation type 0, the PUSCH is received based on cyclic prefix-orthogonal frequency division multiplexing (CP-OFDM).

6. The method of claim 5, wherein, in case that the DCI includes the FDRA field, a resource allocation type of the FDRA field corresponds to dynamic switching, and 1 bit of a most significant bit (MSB) of the FDRA field indicates resource allocation type 0, the PUSCH is received based on the CP-OFDM.

7. The method of claim 5, wherein, in case that the DCI includes the FDRA field and a bandwidth part (BWP) indicator, a resource allocation type of an FDRA field of a BWP indicated by the BWP indicator corresponds to dynamic switching, and a length of the FDRA field is shorter than a length of the FDRA field corresponding to the indicated BWP, the PUSCH is received in the indicated BWP, based on the CP-OFDM.

8. The method of claim 5, wherein, in case that the DCI is associated with a configured scheduling radio network temporary identifier (CS-RNTI) and a new data indicator (NDI) having a value of 0 is included in the DCI, the waveform switching indicator is ignored.

9. A terminal in a communication system, the terminal comprising:

a transceiver; and
a controller configured to
receive, from a base station, information indicating that a waveform switching indicator for a physical uplink shared channel (PUSCH) is included in downlink control information (DCI) through higher-layer signaling,
receive, from the base station, the DCI scheduling the PUSCH, the DCI including the waveform switching indicator, and
transmit uplink data on the PUSCH to the base station, based on the DCI, wherein, in case that the DCI includes a frequency domain resource assignment (FDRA) field and the FDRA field corresponds to resource allocation type 0, the PUSCH is transmitted based on cyclic prefix-orthogonal frequency division multiplexing (CP-OFDM).

10. The terminal of claim 9, wherein, in case that the DCI includes the FDRA field, a resource allocation type of the FDRA field corresponds to dynamic switching, and 1 bit of a most significant bit (MSB) of the FDRA field indicates resource allocation type 0, the PUSCH is transmitted based on the CP-OFDM.

11. The terminal of claim 9, wherein, in case that the DCI includes the FDRA field and a bandwidth part (BWP) indicator, a resource allocation type of an FDRA field of a BWP indicated by the BWP indicator corresponds to dynamic switching, and a length of the FDRA field is shorter than a length of the FDRA field corresponding to the indicated BWP, the PUSCH is transmitted in the indicated BWP, based on the CP-OFDM.

12. The terminal of claim 9, wherein, in case that the DCI is associated with a configured scheduling radio network temporary identifier (CS-RNTI) and a new data indicator (NDI) having a value of 0 is included in the DCI, the waveform switching indicator is ignored.

13. A base station in a communication system, the base station comprising:

a transceiver; and
a controller configured to
transmit, to a terminal, information indicating that a waveform switching indicator for a physical uplink shared channel (PUSCH) is included in downlink control information (DCI) through higher-layer signaling, transmit, to the terminal, the DCI scheduling the PUSCH, the DCI including the waveform switching indicator, and receive uplink data on the PUSCH scheduled by the DCI from the terminal, wherein, in case that the DCI includes a frequency domain resource assignment (FDRA) field and the FDRA field corresponds to resource allocation type 0, the PUSCH is received based on cyclic prefix-orthogonal frequency division multiplexing (CP-OFDM).

14. The base station of claim 13, wherein, in case that the DCI includes the FDRA field, a resource allocation type of the FDRA field corresponds to dynamic switching, and 1 bit of a most significant bit (MSB) of the FDRA field indicates resource allocation type 0, the PUSCH is received based on the CP-OFDM.

15. The base station of claim 13, wherein, in case that the DCI includes the FDRA field and a bandwidth part (BWP) indicator, a resource allocation type of an FDRA field of a BWP indicated by the BWP indicator corresponds to dynamic switching, and a length of the FDRA field is shorter than a length of the FDRA field corresponding to the indicated BWP, the PUSCH is received in the indicated BWP, based on the CP-OFDM.

# FIG. 1

One subframe (110)

$N_{symb}^{subframe,\mu}$ OFDM symbols

1 OFDM symbols (102)

1 subcarrier (103)

$k = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

$k = 0$

$\bar{l} = 0$

$\bar{l} = 14 \cdot 2^{\mu} - 1$

Time

# FIG. 2

EP 4 694 015 A1

FIG. 3

# FIG. 4

Duration
(404)

Frequency resource
(403)

UE bandwidth part
(410)

slot (420)

Frequency

Time

Control resource set #1 (401)

Control resource set #2 (402)

## FIG. 5

1 symbol
(501)

1 PRB (502)

DMRS
(505)

REG
(503)

CCE
(504)

# FIG. 6

FIG. 7

S
(700)

L (705)

| 0 | 1 | 2 | 3 | 4 | 5 | 6 | 7 | 8 | 9 | 10 | 11 | 12 | 13 |

OFDM symbol

$$\text{Slot} \left[ n \cdot \frac{2^{\mu_{PDSCH}}}{2^{\mu_{PDCCH}}} \right] + K_0 \quad (710)$$

# FIG. 8

(800)

$\mu_{PDCCH} = 1$

PDCCH

Slot $_n$   Slot $_{n+1}$   $\cdots$   $t$

$\mu_{PDSCH} = 1$

PDSCH   $t$

$\cdots$   Slot $_n + K_0$

(805)

$\mu_{PDCCH} = 1$

PDCCH

Slot $_n$   Slot $_{n+1}$   $\cdots$   $t$

$\mu_{PDSCH} = 2$

PDSCH   $t$

Slot $\left\lfloor n \cdot \dfrac{2^{\mu_{PDSCH}}}{2^{\mu_{PDCCH}}} \right\rfloor$   $\cdots$   Slot $\left\lfloor n \cdot \dfrac{2^{\mu_{PDSCH}}}{2^{\mu_{PDCCH}}} \right\rfloor + K_0$

# FIG. 9

BWP#A
(910)

DCI
(950)

PUSCH(960)

BWP#B
(920)

No dynamic
waveform
switching field

# FIG. 10

1022

FDRA dynamic
switching indicator

| 1bit | | $1^{st}$ MSB | FDRA Type-0 ($N_{RBG}$ bits) |

| 1bit | | $1^{st}$ MSB | Zeros | FDRA Type-1 ($\lceil \log_2 (N_{RB}^{UL, BWP}(N_{RB}^{UL, BWP} + 1/2 \rceil$ bits) |

Dynamic waveform
switch field

1010

FDRA field
(in case of FDRA dynamic switching) ~1020

(a) ~1000

1062

FDRA dynamic
switching indicator

| $1^{st}$ MSB | | FDRA Type-0 ($N_{RBG}$ bits) |

| $1^{st}$ MSB | $2^{nd}$ MSB | Zeros | FDRA Type-1 ($\lceil \log_2 (N_{RB}^{UL, BWP}(N_{RB}^{UL, BWP} + 1/2 \rceil$ bits) |

Dynamic waveform
switch field

1064

FDRA field
(in case of FDRA dynamic switching) ~1060

(b) ~1050

# FIG. 11

```
┌─────────────────────────────────────────────────┐
│ receive DCI format indicating BWP switching in   │ ∼1100
│ active BWP                                        │
└─────────────────────────────────────────────────┘
                        ↓
┌─────────────────────────────────────────────────┐
│ identify whether dynamic waveform switching is    │ ∼1110
│ configured in newly activated BWP                 │
└─────────────────────────────────────────────────┘
                        ↓
┌─────────────────────────────────────────────────┐
│ identify whether dynamic waveform switching field │
│ is present in DCI format when dynamic wave        │ ∼1120
│ switching is configured in newly activated BWP    │
└─────────────────────────────────────────────────┘
                        ↓
┌─────────────────────────────────────────────────┐
│ determine waveform for PUSCH to be transmitted in │
│ newly activated BWP by using field when dynamic   │
│ waveform switching field is present in DCI format,│ ∼1130
│ perform waveform determination method by UE when  │
│ dynamic waveform switching field is not present   │
│ in DCI format                                     │
└─────────────────────────────────────────────────┘
                        ↓
┌─────────────────────────────────────────────────┐
│ transmit PUSCH in waveform determined in newly    │ ∼1140
│ activated BWP                                     │
└─────────────────────────────────────────────────┘
```

FIG. 12

transmit DCI format indicating
BWP switching to UE ~1200

receive PUSCH from
UE in newly activated BWP ~1210

FIG. 13

FIG. 14

1405 ~ BS processor

BS receiver ~ 1400

BS transmitter ~ 1410

## INTERNATIONAL SEARCH REPORT

| | International application No. |
|---|---|
| | **PCT/KR2024/006368** |

**A. CLASSIFICATION OF SUBJECT MATTER**

**H04L 5/00**(2006.01)i; **H04L 27/26**(2006.01)i

According to International Patent Classification (IPC) or to both national classification and IPC

**B. FIELDS SEARCHED**

Minimum documentation searched (classification system followed by classification symbols)

H04L 5/00(2006.01); H04W 72/04(2009.01); H04W 72/12(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DCI, PUSCH, 파형 변경 지시자(waveform switching indicator), FDRA 필드(FDRA field), 자원 할당 타입(resource allocation type), CP-OFDM

**C. DOCUMENTS CONSIDERED TO BE RELEVANT**

| Category* | Citation of document, with indication, where appropriate, of the relevant passages | Relevant to claim No. |
|---|---|---|
| Y | KR 10-2019-0074297 A (GUANGDONG OPPO MOBILE TELECOMMUNICATIONS CORP., LTD.) 27 June 2019 (2019-06-27) See paragraphs [0049]-[0074]; claims 8-11; and figure 2. | 1,4-5,8-9,12-13 |
| A | | 2-3,6-7,10-11,14-15 |
| Y | ERICSSON. Discussion on dynamic UL waveform switching. R1-2303663, 3GPP TSG RAN WG1 Meeting #112bis. [Online]. 07 April 2023. See pages 4-5. | 1,4-5,8-9,12-13 |
| A | WO 2021-260655 A1 (LENOVO (SINGAPORE) PTE. LTD.) 30 December 2021. See paragraphs [0092]-[0179]; and figures 6-7. | 1-15 |
| A | US 2022-0345261 A1 (LENOVO (SINGAPORE) PTE. LTD.) 27 October 2022 (2022-10-27) See paragraphs [0165]-[0176]; and figures 34-37. | 1-15 |
| A | US 2020-0053730 A1 (QUALCOMM INCORPORATED) 13 February 2020 (2020-02-13) See paragraphs [0203]-[0235]; and figures 14-20. | 1-15 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 August 2024** | **20 August 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/006368**

| Patent document cited in search report | | | Publication date (day/month/year) | Patent family member(s) | | | Publication date (day/month/year) |
|---|---|---|---|---|---|---|---|
| KR | 10-2019-0074297 | A | 27 June 2019 | CN | 109891785 | A | 14 June 2019 |
| | | | | CN | 109891785 | B | 11 January 2022 |
| | | | | CN | 114172621 | A | 11 March 2022 |
| | | | | EP | 3531592 | A1 | 28 August 2019 |
| | | | | EP | 3531592 | A4 | 27 November 2019 |
| | | | | EP | 3531592 | B1 | 07 July 2021 |
| | | | | EP | 3896879 | A1 | 20 October 2021 |
| | | | | EP | 3896879 | A4 | 20 October 2021 |
| | | | | ES | 2892631 | T3 | 04 February 2022 |
| | | | | JP | 2019-536326 | A | 12 December 2019 |
| | | | | JP | 2022-130691 | A | 06 September 2022 |
| | | | | JP | 7291623 | B2 | 15 June 2023 |
| | | | | TW | 201818748 | A | 16 May 2018 |
| | | | | TW | I765928 | B | 01 June 2022 |
| | | | | US | 11026252 | B2 | 01 June 2021 |
| | | | | US | 11737100 | B2 | 22 August 2023 |
| | | | | US | 2019-0274158 | A1 | 05 September 2019 |
| | | | | US | 2021-0258995 | A1 | 19 August 2021 |
| | | | | WO | 2018-081954 | A1 | 11 May 2018 |
| WO | 2021-260655 | A1 | 30 December 2021 | BR | 112022026632 | A2 | 24 January 2023 |
| | | | | CN | 115804046 | A | 14 March 2023 |
| | | | | EP | 4173212 | A1 | 03 May 2023 |
| | | | | US | 2023-0337200 | A1 | 19 October 2023 |
| US | 2022-0345261 | A1 | 27 October 2022 | CN | 114531957 | A | 24 May 2022 |
| | | | | EP | 4052399 | A1 | 07 September 2022 |
| | | | | WO | 2021-084333 | A1 | 06 May 2021 |
| US | 2020-0053730 | A1 | 13 February 2020 | CN | 112514466 | A | 16 March 2021 |
| | | | | EP | 3834503 | A1 | 16 June 2021 |
| | | | | EP | 3834503 | B1 | 29 March 2023 |
| | | | | EP | 4203567 | A1 | 28 June 2023 |
| | | | | US | 11265876 | B2 | 01 March 2022 |
| | | | | WO | 2020-033718 | A1 | 13 February 2020 |

Form PCT/ISA/210 (patent family annex) (July 2022)